Europäisches Patentamt

European Patent Office

Office européen des brevets

(11) Publication number: **0 410 645 A2**

# EUROPEAN PATENT APPLICATION

(21) Application number: 90307893.9

(51) Int. Cl.5: **G01N 35/02**

(22) Date of filing: **19.07.90**

(30) Priority: **24.07.89 US 384594**

(43) Date of publication of application:
**30.01.91 Bulletin 91/05**

(84) Designated Contracting States:
**BE CH DE ES FR GB IT LI NL SE**

(71) Applicant: **TECHNICON INSTRUMENTS CORPORATION**
**511 Benedict Avenue**
**Tarrytown New York 10591(US)**

Applicant: **TRITON BIOSCIENCES INC.**
**1501 Harbor Bay Parkway**
**Alameda, CA 94501(US)**

(72) Inventor: **Cohen, Beri**
**214 The Colony**
Hartsdale, New York 10530(US)
Inventor: **Hedaya, Eddie**
**5-402 Highpoint Drive**
**Hartsdale, New York 10530(US)**
Inventor: **Leniart, Daniel S.**
**6 Guernsey Road**
**Brookfield, Connecticut 06804(US)**
Inventor: **Schwarzberg, Moshe**
**8 Hastings Close**
**Hastings-on-Hudson, New York 10706(US)**
Inventor: **Svenjak, Dario**
**264 Fox Croft Lane**
**Yorktown Heights, New York 10598(US)**

(74) Representative: **Wain, Christopher Paul et al**
**A.A. THORNTON & CO. Northumberland**
**House 303-306 High Holbornorn**
**London WC1V 7LE(GB)**

(54) **Automated analytical apparatus and method.**

(57) An automated analytical apparatus by which homogeneous and heterogeneous analyses can be performed concurrently and on a random access basis includes a circular reaction tray (3) supporting a multiplicity of peripherally arranged reaction cuvettes, sample handling arrangement (4)for supporting samples to be analyzed and a reagent tray (73) supporting a plurality of liquid-reagent sources. The individual samples and liquid reagents are transferred, on a selective-random mode, by appropriate aspirating-dispensing apparatus (5,8) into reaction cuvettes on the reaction tray which are successively positioned at sample and reagent addition stations. The reaction tray is rotated from the reagent addition station to allow mixing and incubation of the reaction mixture and to position each cuvette at an analysis station (11). In the case of heterogeneous assays, magnetic particles are introduced into appropriate cuvettes at a magnetic particle suspension addition station. A particle wash station (9) is provided between the magnetic particle suspension addition station and the analysis station (11) whereat, after the reaction, the solid phase is washed in the reaction cuvette to remove unbound materials. Following such wash, substrate may be added (10) to the reaction cuvette for reaction with an enzyme solid phase and the magnetizable particles are resuspended. The reaction cuvette is then advanced to the analysis station, where the solid phase is withdrawn from the optical path and the appropriate optical readout of the liquid phase is effected. In respect of both heterogeneous and homogeneous assays, the rotational mode of the reaction tray is bidirectional, to provide multiple periodic readouts of each cuvette, to obtain data which is processed to provide the rate of the reaction.

# FIG.4

## AUTOMATED ANALYTICAL APPARATUS AND METHOD

The present invention relates to automated analytical apparatus and methods, and more particularly to an automated discrete-type biochemical analytical apparatus and sequences of operation for performing homogeneous and heterogeneous as says, including immunoassays, concurrently and in a random access mode.

In the field of automated biochemical analytical systems, wherein samples are reacted and analyzed in respect of one or more analytes, it is often desirable that the analyses be performed on a selective basis in respect of each sample. Because of the high demand of clinical laboratories, it is required that such systems should provide, in addition to precise, accurate analytical results, a high through-put, test-menu versatility and also low reagent consumption to reduce the cost-per-test.

Present-day analytical systems may be divided into two categories. One category includes the continuous-flow analytical systems, such as described in the Skeggs et al . U.S. patent specification no. 3,241,341 and the Smythe et al. U.S. patent specification no. 3,479,141. In these systems, continuous streams of successive sample segments and reagent are introduced, at properly related flow rates, and passed along an analytical channel, wherein the successive samples are reacted and analyzed in respect of a same analyte. As described, the stream of sample segments can be divided, or split, into a number of aliquot streams, which are directed each along an individual analytical channel to be reacted and analyzed in respect of a particular analyte. The analytical results derived from the analytical channels are thereafter correlated with respect to the patient or source. While such systems as described in the Skeggs et al . patent are not selective in that a fixed test-menu of analytes is performed, such systems do exhibit an extremely high through-put and are capable of satisfying the test requirements of large clinical laboratories. However, the Smythe et al . patent describes a continuous-flow system of high through-put, wherein selectivity is obtained by injecting or introducing, on a selective basis and on in-line fashion, precise volumes of liquid reagents to react with successive sample segments flowing in a continuous stream.The second category includes discrete-type analyzers, wherein properly related volumes of sample and reagent are introduced into a reaction cuvette, the resulting reaction being measured to determine the concentration of the analyte. Such systems may be adapted to perform a single type of analysis, termed a batch-type system, or to perform different types of analyses with respect to the individual samples, termed a random access system. In such systems, a plurality of reaction cuvettes can be formed into an integral reaction tray, for example, as described in the Cassaday et al . U.S. patent specification no. 4,357,301. The reaction tray described therein is rotated to advance each cuvette, in turn, between various treatment stations, e.g. a sample addition station, a reagent addition station and an analytical readout station.

To obtain maximum versatility, discrete-type systems are often adapted to perform different types of analyses, so as to quantitate various analytes of interest present in biological samples. As will be appreciated, analyte quantitation in respect of such multiple reactions requires that multiple optical measurement, e.g. turbidimetric, nephelometric, fluorometric, luminometric or colorimetric, be made on the reaction product. To achieve highly accurate results, therefore, it is essential that such multiple measurements be made in respect of each individual cuvette, whether supported individually or as an integral part of a reaction tray under identical conditions. Unless this is achieved, accuracy of the analytical result is reduced.

Accordingly, an automated analytical system such as that described in the Uffenheimer U.S. patent specification no. 4,629,703, was developed. There is described an automated discrete-type biochemical analytical system wherein a reaction cuvette tray is adapted for bidirectional rotational movement, such as to effect and precisely measure multiple readings on the same cuvette over time. The bidirectional rotational movement also ensures a proper repositioning of each of the individual cuvettes supported on the tray at the various treatment stations.

It is well known in the art to provide automated analytical systems for performing homogeneous assays, and examples of such devices and systems are found in the following U.S. patents. In Anderson et al . U.S. patent specification no. 4,157,871, a system for the detection of precipitate-forming antigens by means of reacting their corresponding antibodies in a sample cell to form light scattering centres is disclosed. The quantity of scattering centres formed is measured by nephelometric means and a measuring system performs an immunonephelometric analysis. The Takekawa U.S. patent specification no. 4,457,843 discloses both a method and an apparatus for detecting an immunological agglutinating reaction including the steps of measuring light absorption of a liquid medium with antibody before and after an antigen-antibody reaction by using light which is absorbable by the antibody, and calculating the difference of the light absorptions. In this way, the presence or absence of agglutination can be detected based on the fact that

3

the agglutinating reaction reduces the concentration of antibody, so affecting the light absorption of the liquid medium. The apparatus includes a turntable, two photometers, sample and reagent handling means and calculator. As is typical of methods and apparatus for performing homogeneous assays, these references do not disclose solid phase introduction or subsequent separation of the solid phase from the reaction mixture for further analysis as such assay components and steps are not required.

Further, it is known in the art to provide analyzing systems for the performance of heterogeneous assays. For example, Curry et al . U.S. patent specification no. 4,271,123 discloses a sample analyzer for quantitating relatively small amounts of clinically significant compounds in a liquid sample. The analyzer has a transparent cell for holding the liquid sample. A light source focuses a stable light beam onto the sample so that fluorescent particles in the sample cause fluorescent emissions, the intensity of which is a function of the intensity of the light beam and the concentration of fluorescent particles in the sample. A detector in optical communication with the cell receives and senses photons forming the fluorescent emissions of the particles when excited by the light beam. The sampler holds a multiplicity of vials in an upright position in a row, advances the vials in incremental steps to present them at an aspiration station and includes an aspirator having a downwardly open suction tube that is vertically inserted into and withdrawn from the vials. A vacuum source withdraws the liquid sample from the vials through the suction tube and flows it to the sample cell in the analyzer. A mixer surrounds the suction tube and is activated before the sample is withdrawn from a uniform suspension. Chiknas U.S. patent specification no. 4,470,954 discloses a centrifugal analyzer and bead washer adapted for heterogeneous immunoassays and for the separation of an antigen or antibody attached to a sphere. Also, Guigan U.S. patent specification no. 4,673,653 discloses a method of performing biological analysis of a liquid sample using a one-piece plastic container which is compartmented to provide a storage chamber for the sample, a calibrated cell and a plurality of storage chambers for various liquids such as a conjugate liquid, a substrate liquid and a blocking liquid. A succession of centrifuging operations serves to successively pass the sample and the liquids into a reaction vat containing a bead which is initially covered in antigens or antibodies. Means are also provided for rinsing the bead.

While the above prior art demonstrates the development of analytical systems for the performance of homogeneous or heterogeneous assays, in each instance the system is dedicated to a particular assay technology. By this we mean that the particular system is capable of performing either heterogeneous or homogeneous assay methods, but not both. The prior art does not teach or describe an automated analytical system or method of operation capable of performing selectively both homogeneous and heterogeneous assays in a random access fashion. Furthermore, the prior art is silent with respect to an apparatus and method for performing both homogeneous and heterogeneous assays in respect of analytes of interest concurrently on the same or different samples.

We have now devised a method and apparatus capable of performing, selectively on the same sample, homogeneous and heterogeneous assays concurrently and in a random access fashion.

According to the present invention, there is provided a method of effecting analysis of a plurality of liquid samples wherein each sample is analyzed with respect to at least one analyte, said method comprising the steps of:

a) mixing an aliquot of a first sample with one or more liquid reagents at different times in a reaction cuvette to form a first reaction mixture:

b) mixing an aliquot of the same or a different sample with one or more liquid reagents at different times, wherein at least one liquid reagent comprises a suspension of solid phase particles, in a different reaction cuvette to form a second reaction mixture resulting in a bound and an unbound constituent;

c) permitting the reactions of the first and second reaction mixture to proceed concurrently and independently in said reaction cuvettes;

d) selectively separating and removing the unbound constituent from the bound constituent in said different reaction cuvette;

e) adding at least one additional reagent to the solid phase suspension in said different reaction cuvette to generate a detectable signal; and

f) analyzing the reaction in one of said reaction cuvettes independently of the other.

The invention also includes automated analytical apparatus for effecting analysis of a plurality of liquid samples wherein each sample is analyzed with respect to at least one analyte, said apparatus comprising:

a) means for providing an aliquot of a first sample to a reaction cuvette;

b) means for providing one or more liquid reagents to said reaction cuvette to form a first reaction mixture therein;

c) means for providing an aliquot of the same or different sample to a different reaction cuvette;

d) means for providing one or more liquid reagents and at least one liquid reagent comprising a suspension of solid phase particles to said different reaction cuvette to form a second reaction mixture therein, said second reaction mixture resulting in a bound and an unbound constituent;

e) means for selectively separating and removing the unbound constituent from the bound constituent in said different reaction cuvette;

f) means for adding at least one additional reagent to the solid phase suspension in said different reaction cuvette to generate a detectable signal; and

g) means for analyzing the reaction in one of said reaction cuvettes independently of the other.

Before continuing further with the discussion of the present invention, a brief description of the principles of immunoassay methods which may be used in the present invention will be given to provide common terminology. In general, immunoassays are based on the ability of antibodies (which are protein molecules) to bind specifically to antigens (substances against which they were raised). Such antigens may be drugs, hormones, viruses, bacteria, proteins and other chemicals of clinical interest. When they are to be clinically assayed they are termed analytes.

The simplest form of an immunoassay is immunoprecipitation, where the antibody reacts with an analyte present at a relatively high concentration in the sample to form a macromolecular aggregate that resultsd in increased light scatter by the medium proportional to the analyte concentration.

Another immunoassay method is termed a competitive immunoassay. An antibody specific to the analyte to be assayed is added to the sample. At the same time, a tracer, which is the same analyte or analyte analog conjugated to a label to allow for a measurable signal corresponding to its quantity, is also added in a known amount. The analyte and the tracer both compete for the antibody binding. The more sample analyte there is, the less tracer will bind to the antibody. Eventually, the antibody-bound tracer is measured.

A third method which is typically used for certain protein analytes is termed a sandwich immunoassay. These antigens have at least two distinctive binding sites to which different specific antibodies bind. The sample suspected of containing the analyte is added to the first antibody, and a second antibody conjugated to a label or signal producing species, e.g. an enzyme, is added so that the analyte becomes bound at two sites, i.e. is sandwiched between the two antibodies. Excess reagents may be used in this case to speed up the binding reactions. The signal measured is directly proportional to the amount of analyte, whereas in competitive assays the signal is inversely proportional to the amount of analyte.

In all immunoassay methodologies, a series of standards or calibrators is prepared, i.e. solutions of the analyte of known concentrations covering the clinical concentration range. These are assayed in exactly the same way as the sample and provide a series of signal measurements corresponding to the known concentrations from which a standard curve is drawn. This is called a standard dose response curve. The optical signal corresponding to the unknown sample correlates to a concentration value through interpolation from this standard curve.

The apparatus and method of the present invention may utilize a homogeneous assay methodology generally referred to as a latex-enhanced agglutination, and a heterogeneous assay methodology based on magnetic separation, hereinafter magnetic separation assay (MSA).

Latex-enhanced agglutination immunoassays are competitive immunoassay methods in which the antibody is coupled to a polymeric latex particle, such as a sub-micron polymeric latex particle made of polyvinyl benzyl chloride. An agglutinator is added consisting of a soluble polymer, such as ficoll, to which the analyte is coupled. Because of the polymeric nature of the two components, the binding reaction between them results in agglutination of the latex particles and increased rate of turbidity of the reaction mixture. The more analyte there is in the sample, the lower the rate of agglutination in the reaction mixture because of competition between the analyte and the agglutinator for the antibody.

It is generally accepted that the sensitivity of homogeneous assays is limited. Consequently, non-isotopic immunoassays employing separation techniques have been developed to provide sensitivity for analytes currently assayed by radioimmunoassay techniques.

The magnetic separation immunoassay is a heterogeneous assay requiring separation of a solid phase-bound label from the free label. In this assay scheme, the antibody is coupled to a magnetic particle and the tracer is an analyte-label conjugate (in competitive assays) or antibody-label conjugate (in sandwich assays). As the immunological reactions between the components proceed, a portion of the tracer becomes attached to the magnetic particles. Eventually, the particle and attached tracer complex are separated from the supernatant of the reaction mixture; the supernatant, including the unbound tracer, is washed away. Then the amount of label that is present on the particles is measured. The amount of label present on the particles is inversely proportional to the amount of analyte in the patient's sample for competitive assays and directly proportional to the amount of analyte for sandwich assays.

Typically the label is an enzyme, and the amount of the enzyme present on the particles is determined by adding a substrate that is chemically modified by the enzyme to provide a detectable, e.g. optical, signal.

As will be discussed hereinafter in detail, variations of the immunochemistry discussed above are implemented in the automated analytical apparatus of our invention. We have devised the concept of a universal solid phase antibody. Rather than having a separate solid phase with a specific antibody for each analyte, which creates a severe handling problem, a common capture system for a group of assays can be used. In this case, the magnetic particles and the first antibody each carry one of the two components of a specific binding system. The capture system may be based on an organic-antiorganic molecular system, e.g. a fluorescein-antifluorescein pair, where the particles carry an antif luorescein antibody and each of the analyte-specific antibodies is conjugated to fluorescein. When the two interact, a strong binding results.

A second variation involves an enzyme detection method. To achieve a higher sensitivity, a method of enzyme amplification developed by IQ (Bio) may be incorporated into the present invention, and is described in U.S. patent specification no. 4,446,231. In this scheme, a substrate for the enzyme is converted by the enzyme to a first reaction product which is by itself a co-factor for a second enzyme. A third enzyme uses a product of the second enzymatic reaction as a substrate to generate a detectable signal and also to regenerate the first reaction product, thus enhancing the sensitivity of the assay.

In each of the methodologies practised on the automated analyzer of the present invention, an aliquot of the patient's sample is transferred to a reaction cuvette where one or more reagents are added to it from reagent dispensers. In the latex-enhanced agglutination immunoassays, turbidity develops which is monitored by reduced light transmission through the cuvette. In the magnetic separation method, a magnetic particle suspension is added to which the enzyme label becomes attached as a result of the reactions that take place. The contents of the cuvettes are washed off except for the magnetic particles and the species they carry, including the enzyme label. Thereafter, a substrate to this attached enzyme is added generating a color that is read by a colorimeter.

When reading the color of a reaction mixture containing magnetic particles, which are typically solid black polymeric beads, the particles must be cleared or removed from the optical path. For this purpose there are magnets at the reaction read station that attract the particles out of the optical path. After leaving the reaction read station, the particles are resuspended in the substrate solution by the shaking of the reaction tray and by other means as described.

The hardware and control system for the apparatus are designed to meet the requirements of sample, reagent and particle suspension handling and dispensing, incubation of reaction mixture, separation of the magnetic particles where applicable, and interpretation of the optical data to produce a quantitative reading of the analyte of interest. The apparatus is adapted to perform a variety of assay protocols in terms of incubation times and the order of sample, reagent and particle addition, all being run in a random-access, batch, profile or STAT mode.

A variety of assay protocols may be performed by the analyzer of the present invention, which can for example be composed of a set of the following building elements:

a) Sample addition to the cuvette at the beginning of an assay, and optionally as a second addition, eg. 21 minutes later.

b) Magnetic particle addition to the cuvette at the beginning of an assay, or optionally, eg. 21 minutes later.

c) Two reagents, $R_1$ and $R_2$, added to the sample at the same time (a simultaneous addition assay).

d) $R_2$ added some time, eg. 16 minutes, after $R_1$ addition (a sequential addition assay).

e) Particle wash performed after, eg. 14.5 to 16 minutes or 29.5 to 31 minutes, the start of the assay.

f) Substrate added after either particle wash, eg. 17.5 or 32.5 minutes from the start of the assay.

Optical readings can for example be made after $R_1$ addition, after sequential $R_2$ addition, after either substrate addition or after delayed sample addition.

The specific manner on how this is achieved and the combinations of these format building blocks for creating assay protocols applicable for the present invention are described in detail hereinbelow.

In a preferred aspect of the present invention, a circular reaction tray is used. In this case, a given reaction cuvette ultimately returns to its initial position. For example, if the circular tray consists of 100 cuvettes and each cuvette is incremented every 30 seconds (a 30-second cycle), each cuvette would return to its initial position every 50 minutes. Thus multiples of 50 minutes may be added to any of the delayed additions and readings. For example, $R_2$ can be added after 16 min., 66 min., 116 min., etc. Substrate can be added also after 67.5 min. and 82.5 min., and so on, if mandated by the assay protocol. Similarly, an assay protocol may include a multiplicity of reagent additions, wash steps and analysis steps.

In accordance with one aspect of the present invention, the automated analytical system includes an arrangement of components in modular form. The automated analytical apparatus includes a circular reaction tray comprising a plurality of reaction cuvettes. The reaction tray is adapted for bidirectional rotational motion to successively advance each cuvette, in turn, between various positions or treatment stations, i.e. a sample-particle addition station, a reagent addition station, a particle wash station, a substrate addition station, a reaction read station and a cuvette wash station.

The sampling handling means preferably comprises an open ended sample tray mechanism adapted to receive a plurality of removable racks. Each rack supports sample containers containing the liquid samples to be analyzed. The racks can be removably carried on shuttles which present each sample container, in turn, to a sample aspiration or take-off station.

A magnetic particle suspension storage means is preferably provided in the form of one or more containers adapted and operable to maintain a liquid suspension of fine magnetic particles in an aqueous medium.

A preferred sample aspirating-dispensing means includes a sample probe adapted, under the control of an associated drive mechanism and pump means, for vertical and translational reciprocal movement so as to be selectively positioned over and immersed into a sample container at the sample aspiration station to aspirate an aliquot of sample, and to dispense the aliquot of sample so aspirated into a selected reaction cuvette at the sample-particle addition station. The magnetic particle storage means may lie along the translational path of the sample probe in order that the sample probe may be immersed therein to aspirate the desired volume of particle suspension from a container, and thereafter deposit the aliquot of particle suspension in a selected reaction cuvette in the reaction tray. The particle suspension may be aspirated immediately prior to or after aspiration of the sample and the combination thereafter dispensed into the cuvette, or the particle suspension and sample can be aspirated and dispensed in separate operations.

After the aliquot of sample and, if appropriate, aliquot of particle suspension is dispensed at the sample addition station by the sample probe into a selected reaction cuvette, the cuvette is advanced to a reagent addition station to receive one or more liquid reagents necessary for the performance of a particular assay. The reagent station includes a bidirectionally rotationally mounted reagent tray carrying a plurality of reagent dispensers within a refrigerated compartment. A reagent aspirating-dispensing means, includes a reagent probe and associated drive mechanisms and pumps. The reagent probe is adapted for selective vertical reciprocal and bidirectional rotational movement to aspirate an aliquot of reagent from the reagent dispenser and dispense the same into the cuvette.

For certain heterogeneous assay protocols, and specifically magnetic separation enzyme immunoassays, it is necessary to remove the unbound constituent or supernatant from the bound constituent or solid phase of the reaction mixture in the cuvette before adding further reagents, e.g. substrate, to the cuvette. To this end, a particle wash station can be provided. The particle wash station preferably has a plurality of concentric cylindrical dual dispense-aspiration independently controlled probes adapted for insertion into successive cuvettes. The volume of wash liquid dispensed and the removal of the supernatant and wash liquid are controlled by timed valves. Magnets located at the side of the cuvette path through the wash station draw the solid phase to the sides of the cuvettes to facilitate the washing action.

Following the particle wash station, the reaction cuvette is advanced to a substrate addition station wherein a substrate necessary for the measurement of the enzyme label is added to the cuvette. The substrate addition station includes a refrigerated substrate storage tray adapted to hold a plurality of liquid substrate dispensers and a substrate aspirating-dispensing means similar in design and function to the reagent aspirating-dispensing means at the reagent addition station.

Thereafter, the reaction cuvette is passed over a series of magnets positioned below the cuvette path immediately prior to and at the reaction read station. The magnets are adapted to draw the solid phase out of the optical path prior to the cuvette advancing to and while the cuvette is in a reaction read station at which the appropriate optical readings are taken.

Upon completion of the reaction reading procedure, each reaction cuvette is advanced to a cuvette wash station to cleanse the cuvette for re-use. The cuvette wash station is similar in design and construction to the particle wash station except that there are no magnets to draw the solid phase complex, if present, away from the effects of the wash since it is desired to remove the entire contents of the cuvette, i.e. cleanse it thoroughly, for subsequent re-use.

The surface of the various aspirating-dispensing probes discussed hereinabove may be coated with a thin film of liquid immiscible with the liquids to be aspirated. This thin immiscible film prevents contamination between segments of successively aspirated liquids and, also their respective sources. Further, if required by the particular assay protocol, segments of the immiscible liquid can be aspirated between successive liquid segments, to maintain such liquid segments discrete.

A computerized control system coordinates movement and operation of the various components of the apparatus to perform the desired assay protocols.

In order that the invention may be more fully understood, reference is made to the accompanying drawings, wherein:

FIGS 1,2 and 3 are, respectively, a front view, a plan view and a side elevation view of an embodiment of automated clinical analyzer according to the present invention;

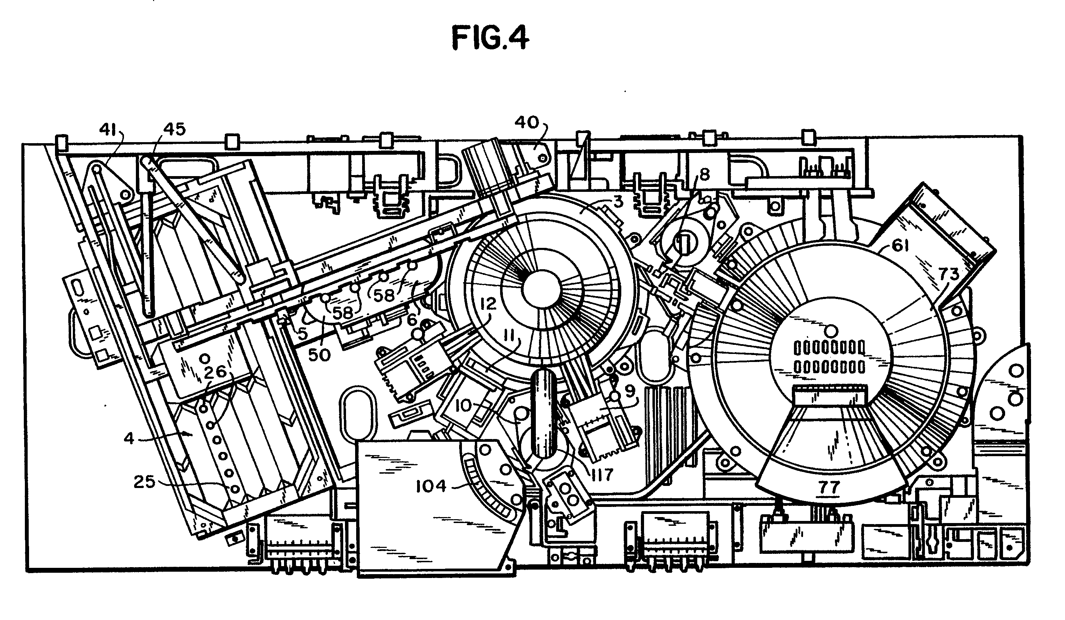

FIG. 4 is a plan view, similar to FIG. 2, at an enlarged scale, with some of the component covers removed to show the apparatus in more detail;

FIG. 5 is a schematic view illustrating the relative locations of certain major components of the embodiment of automated cylindrical analyzer

FIG. 6 is a plan view, in partial section, of the reaction tray compartment:

FIG. 7 is a front elevation view, in partial section, of the reaction tray compartment;

FIG. 7A is an enlarged, sectional view showing schematically the interaction of a cuvette and a wash probe in the particle wash station;

FIG. 8 is a side elevation view of the sample aspirating-dispensing means;

FIG. 9 is a plan view, at an enlarged scale, of the sample aspirating-dispensing means;

FIGs. 10 and 11 are a plan view and partial sectional elevation view, respectively, of the magnetic particle suspension storage means;

FIG. 12 is a sectional view of a typical particle suspension container;

FIG. 13 is a partial top sectional view of the reagent storage compartment;

FIG. 13A is a partial sectional elevation view of a portion of the reagent storage compartment;

FIG. 14 is a plan view, at an enlarged scale, of the sample handling means;

FIG. 15 is a side elevation view of a typical sample handling rack;

FIGs. 15A and ISB are illustrations of repr-esentative sample containers;

FIGs. 16 and 17 are, respectively, front and side elevation views of the particle wash station;

FIGs. 17A and I7B are sectional views depicting various aspects of the construction of a typical wash probe;

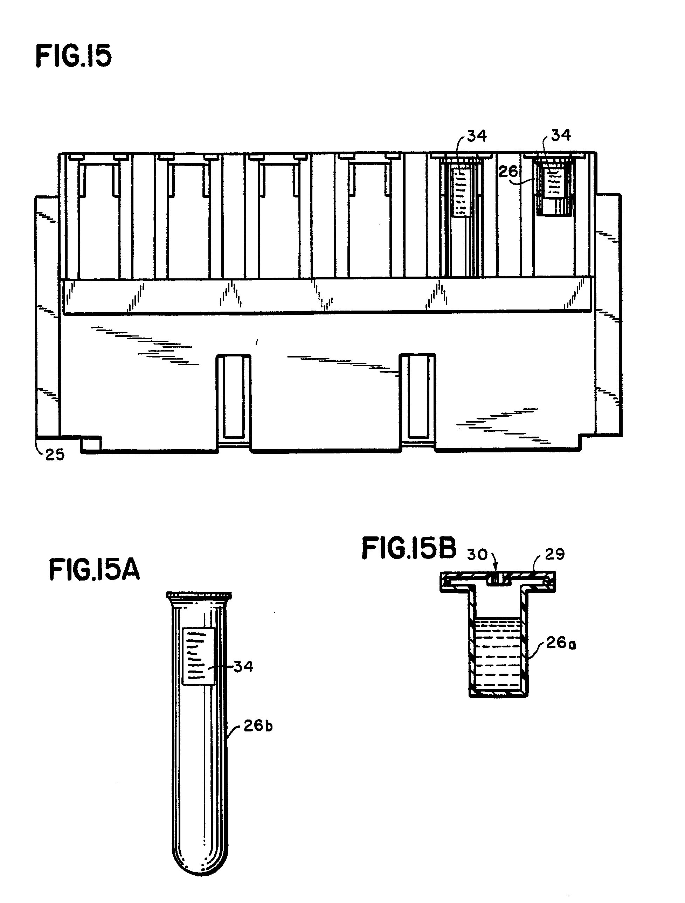

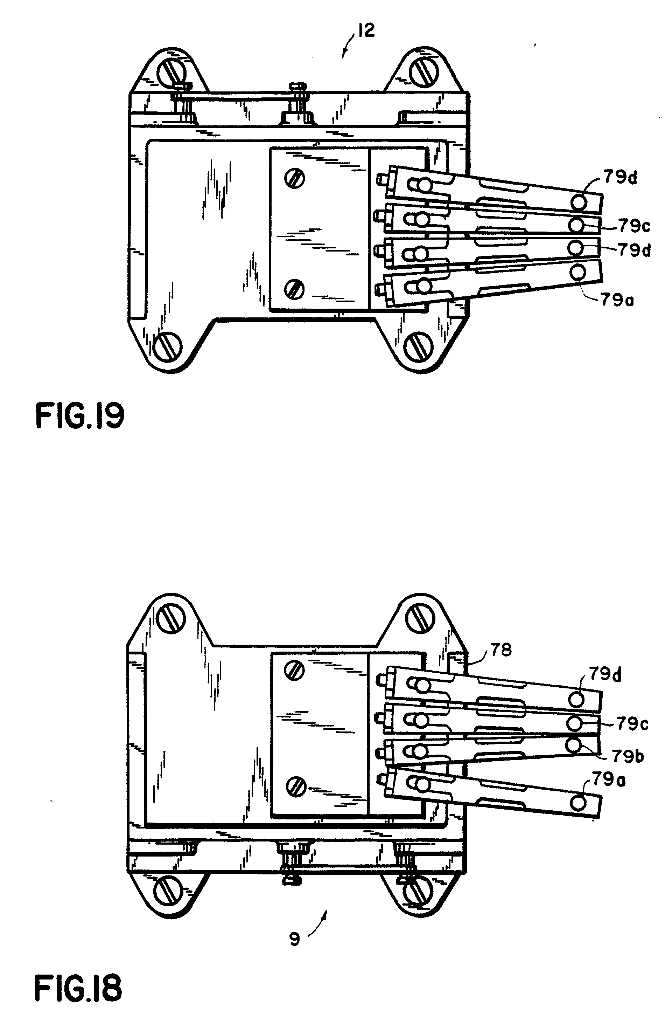

FIGs. 15 and 19 are top plan views of the particle wash and cuvette wash assemblies, respectively;

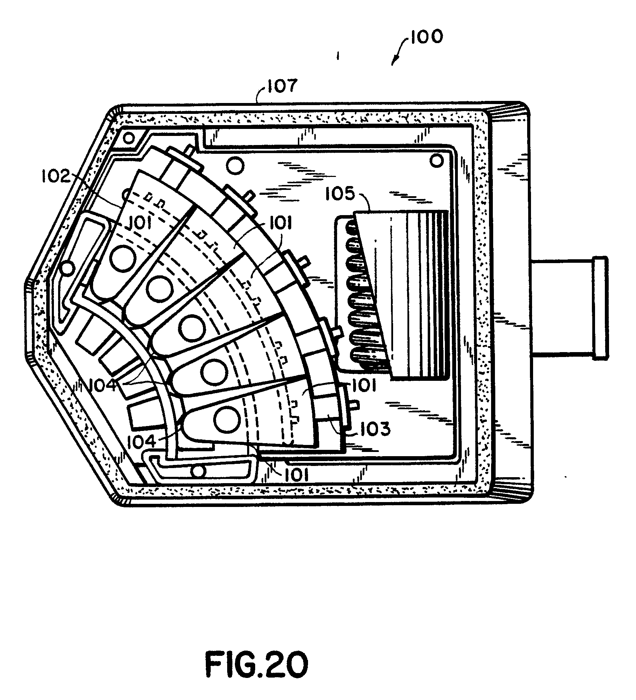

FIG. 20 is a top sectional view of the substrate tray compartment;

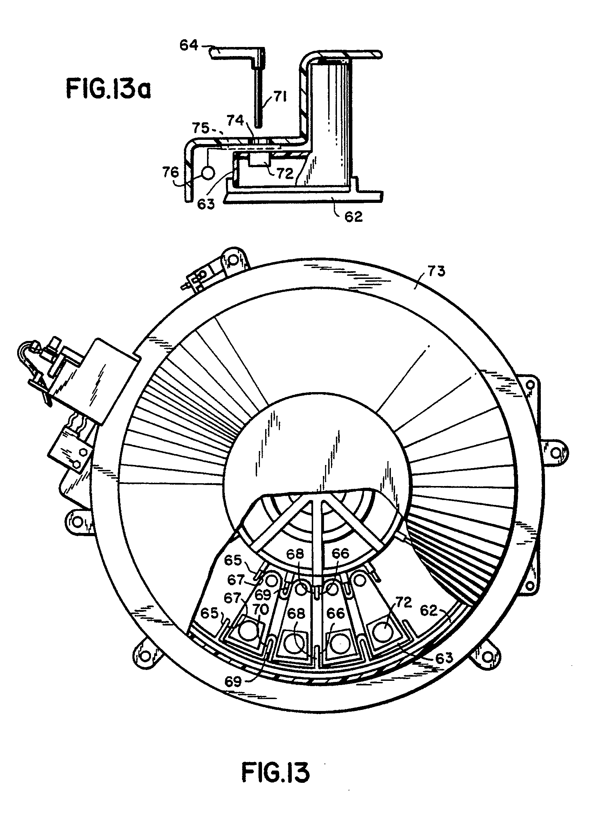

FIG. 11 is a partial sectional elevation view of the substrate tray compartment of FIG. 20;

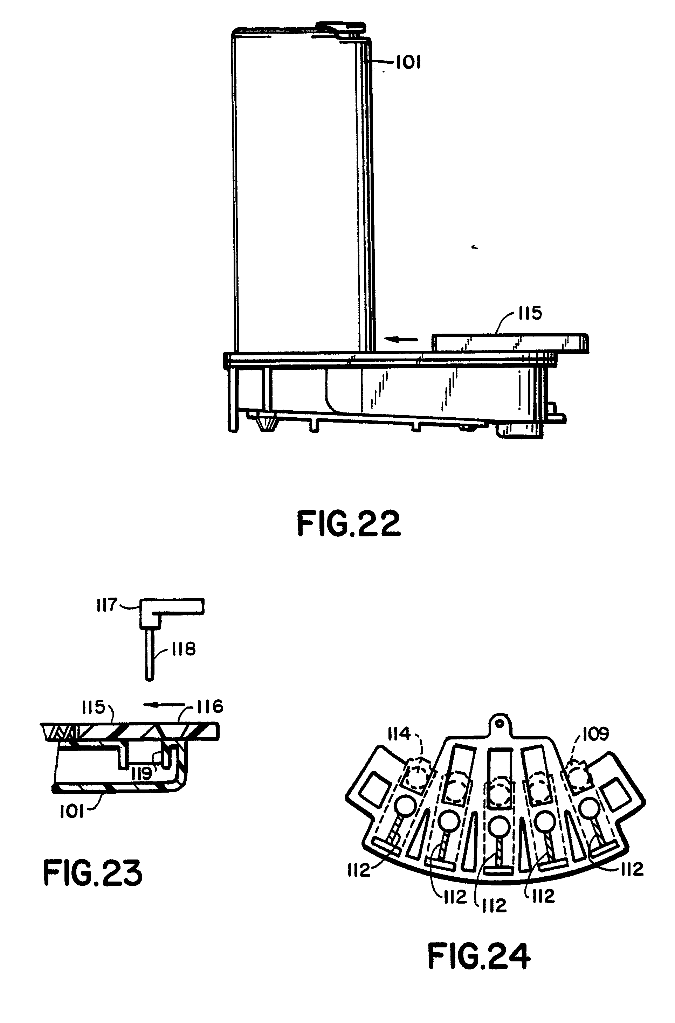

FIG. 22 is a side elevation view of a typical substrate dispenser;

FIG. 23 is a partial sectional view, at an enlarged scale, of a portion of the substrate dispenser;

FIG. 24 is a plan view of the cover assembly for the substrate compartment;

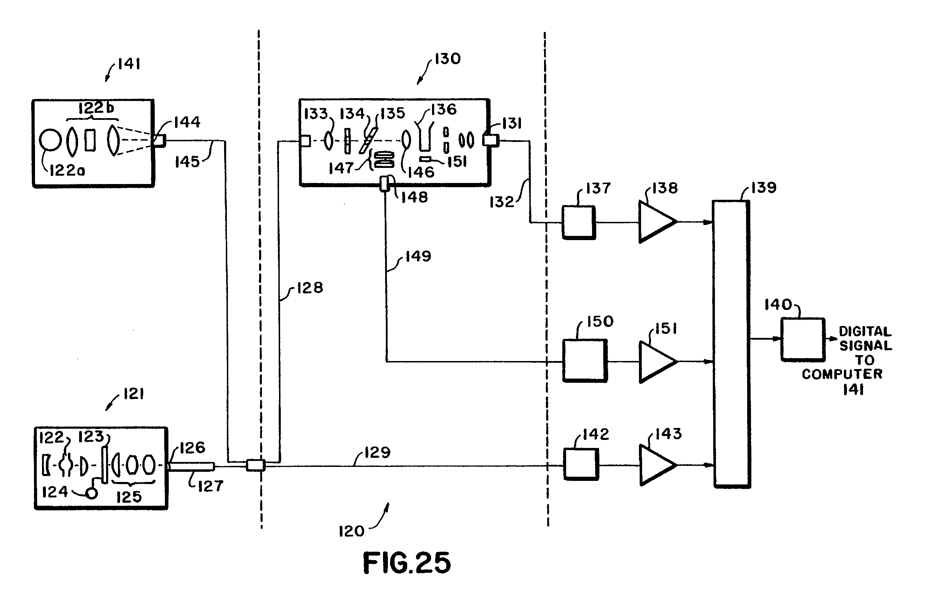

FIG. 25 is a simplified schematic representation of the optical system of the analytical analyzer;

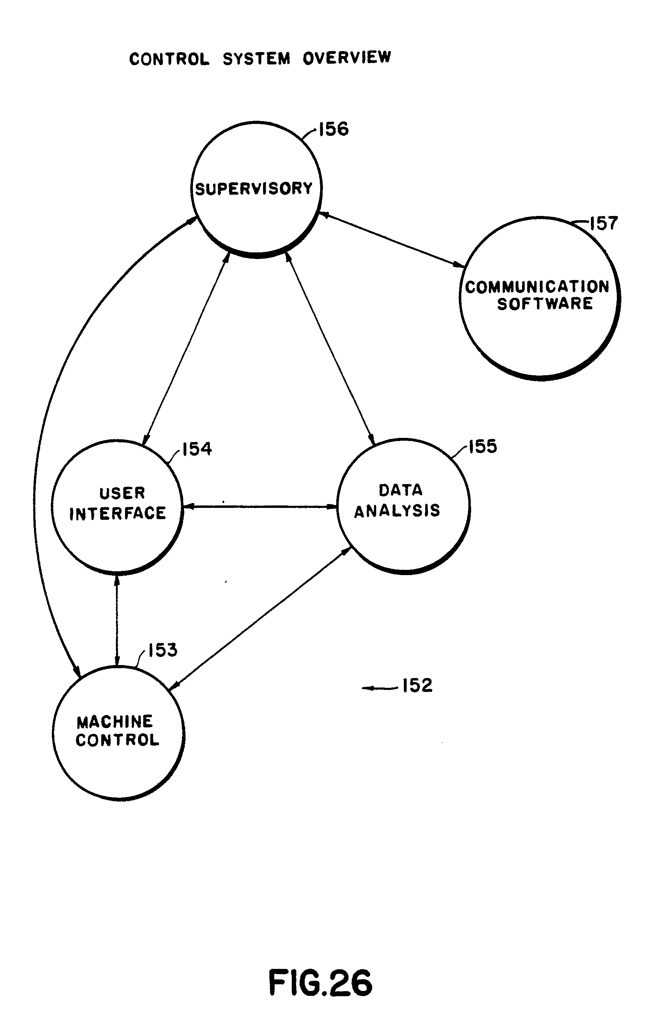

FIG. 26 is a simplified block diagram of the computerized control system; and

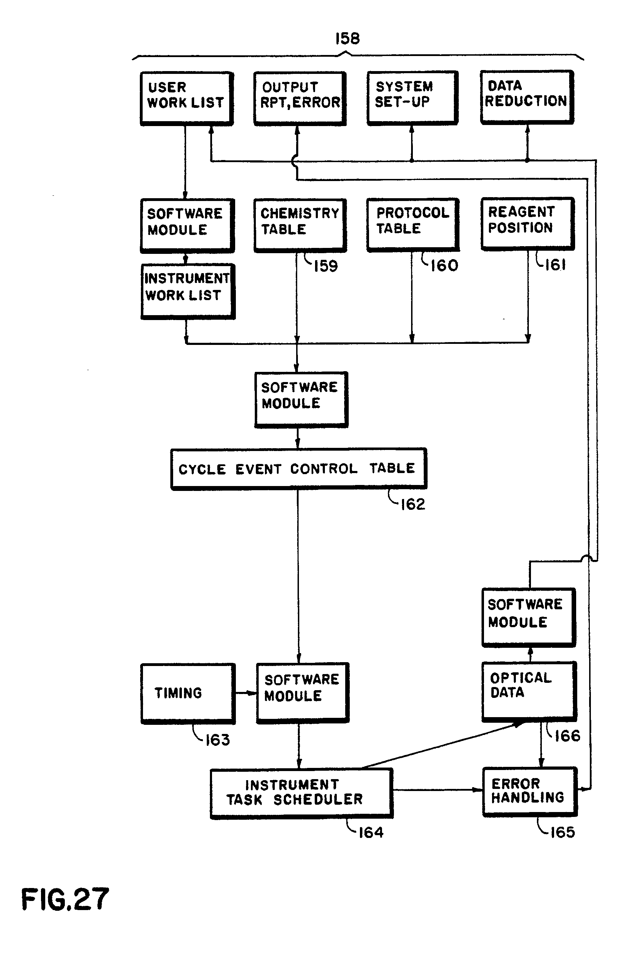

FIG. 27 illustrates the computerized control system in more detail.

The drawings illustrate a preferred embodiment of the automated analytical apparatus according to our invention with only those components of primary interest with respect to the invention being shown. Thus, the drawings do not illustrate all of the mechanical and electrical elements, i.e. motors, solenoids, pumps, valves, sensors, required for driving and controlling the various components of the apparatus. All of these elements may have any known, conventional form, which can readily be realized by one of normal skill in the art having knowledge of the information hereinafter given with regard to the desired mode of operation of the various components in an analysis apparatus according to the invention for treating the samples in the manner intended.

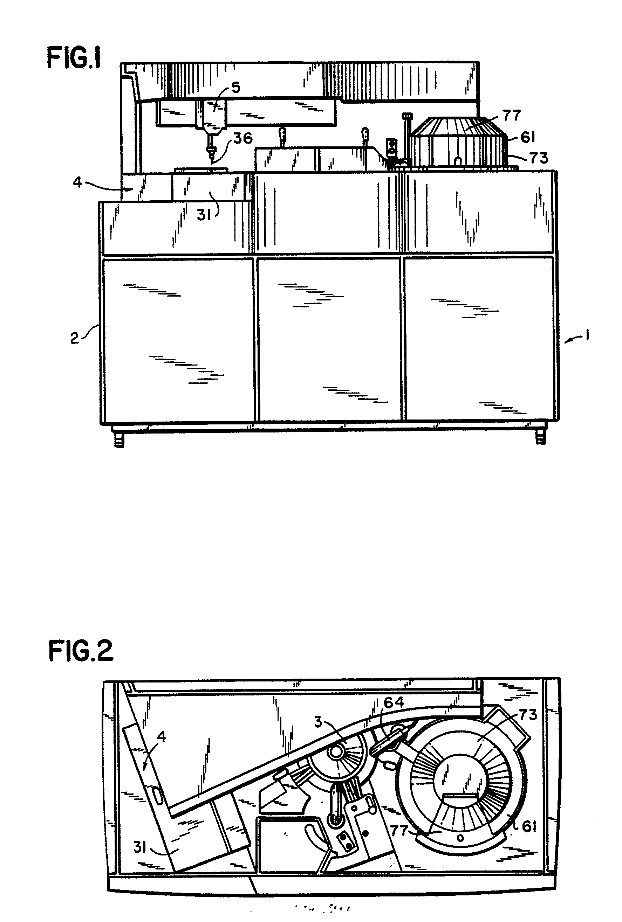

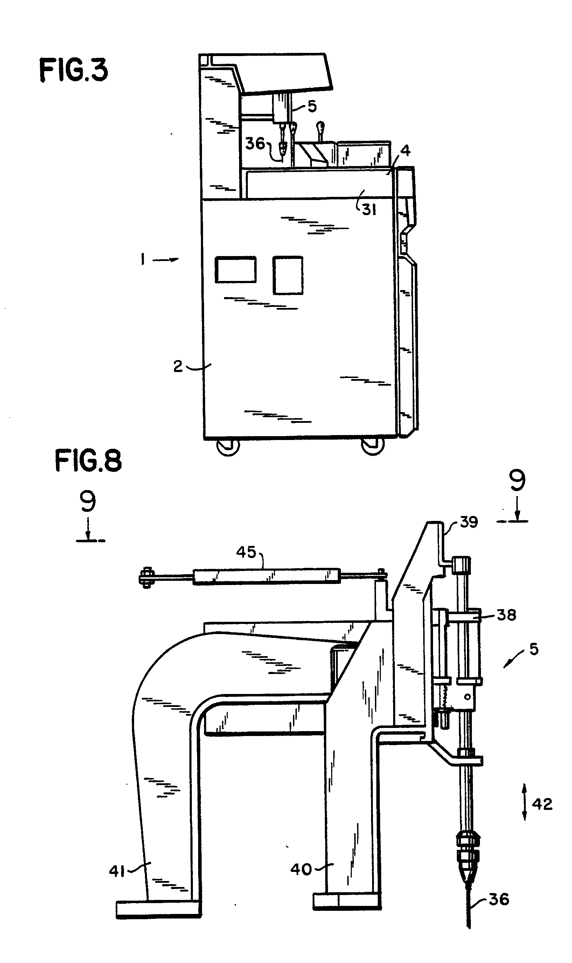

Referring now to the drawings, there are disclosed in FIGs. 1, 2 and 3, the front, top and side elevational views, respectively, of an automated analytical apparatus embodying the various aspects of the present invention which apparatus is identified generally by the reference numeral 1. The apparatus includes a cabinet 2 which houses at least some of the aforementioned, but not shown, elements of the apparatus.

Arranged on top of the cabinet 2 are a reaction tray compartment 3, sample handling means 4, sample aspirating-dispensing means 5, and a magnetic particle suspension storage means 6.

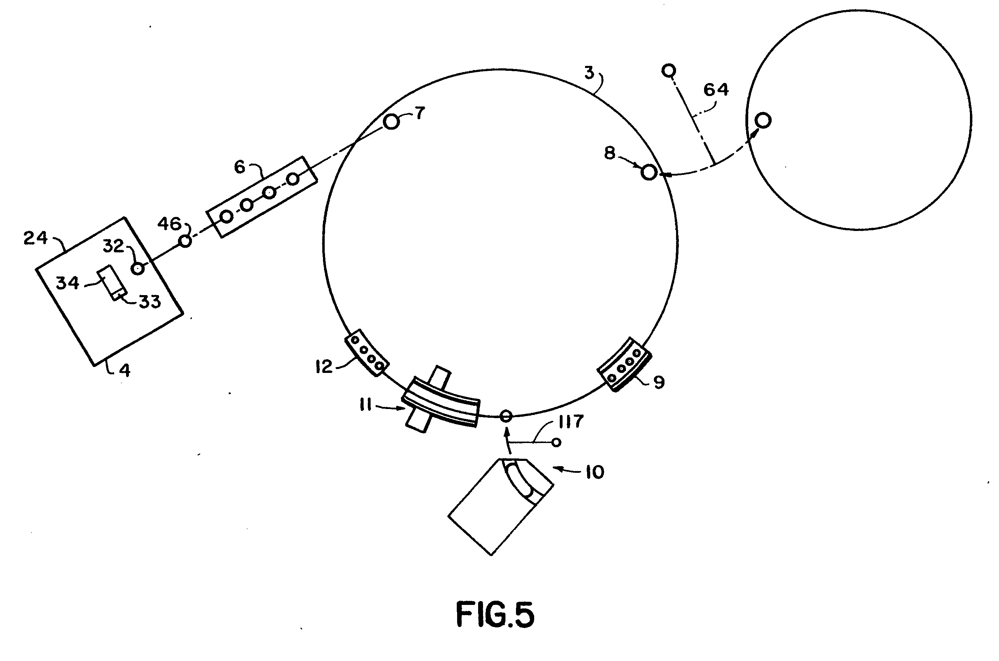

As can best be seen in the schematic representation of the apparatus in FIG. 5, disposed at selective locations about the circumference of the reaction tray compartment 3, are a sample-particle addition station 7, a reagent addition station 8, a particle wash station 9, a substrate addition station 10, a reaction read station 11, and a cuvette wash station 12.

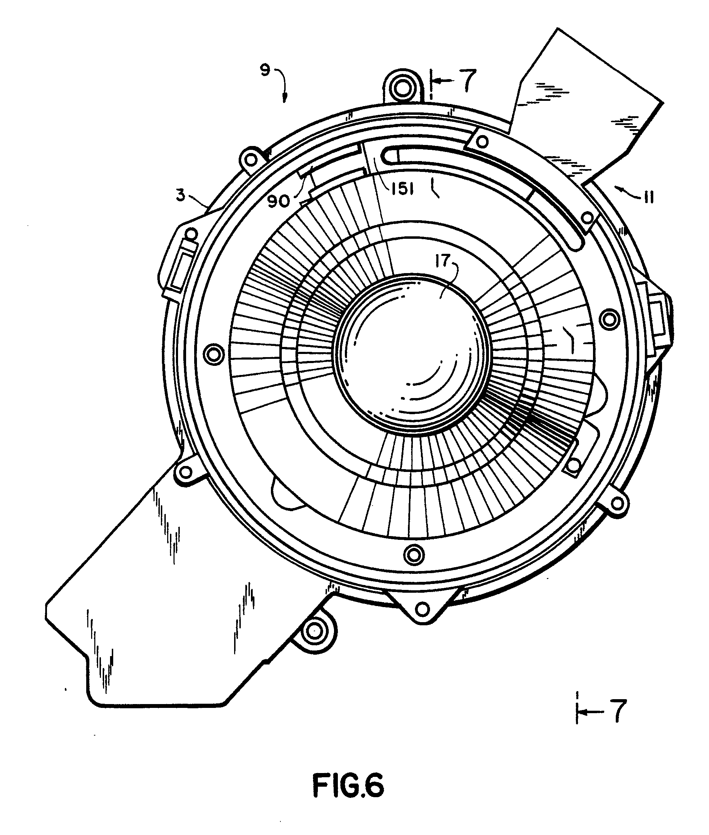

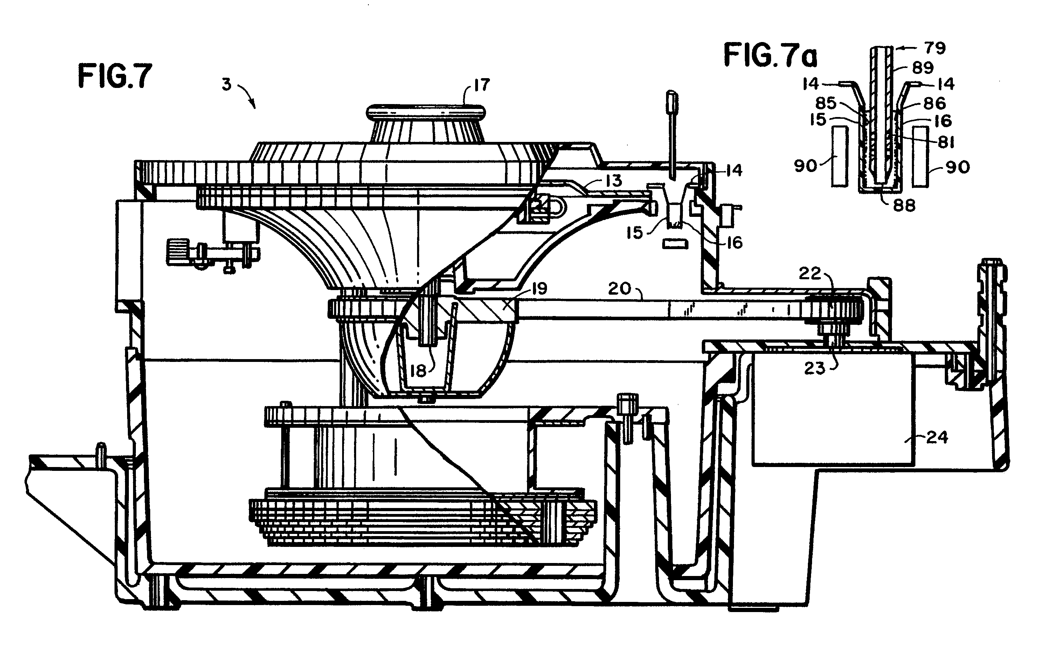

With reference to FIGs. 6 and 7, the reaction tray compartment 3 includes a circular reaction tray 13 having a plurality, e.g. 100, of reaction cuvettes 14. Preferably, the reaction tray 13 may be of the type described in the Cassaday, et al., U.S. Pat. No. 4,357,301 wherein the cuvettes 14 are integrally formed and circularly arranged about the axis of rotation of the tray. Each reaction cuvette 14 is open at the top, and has at least two opposing transparent walls 15 and 16. A removable evaporation cover 17 is provided to minimize evaporation of the cuvette contents and also is preferably formed of an opaque material or is otherwise rendered opaque to provide a light-tight enclosure to optimize the optical readings to be conducted. The reaction tray 13 is removably mounted and keyed on a vertical shaft 18 and is driven by suitable means operative to rotate the tray in either a clockwise or counterclockwise direction with reference to FIG. 6, through a sequence of angular positions. As shown in FIG. 7, the shaft 15 carries a toothed pulley 19 which is engaged by a toothed drive belt 20 driven by a toothed drive pulley 22 carried on a shaft 23 of a reversible stepping motor 24. The reaction tray compartment 3 is heated by circulating temperature controlled air in the compartment. Such heating mechanisms are well known to those skilled in the art. For example, the multi-zone heater arrangement disclosed in Gyori, U.S. Patent No. 4,706,736 may be utilized and is designed to control the temperature of the gaseous heating medium, e.g. air, within accurate temperature ranges at all locations across the path of flow of the medium. Preferably, the system is designed to maintain the temperature within the reaction tray compartment at a nominal 37° C.

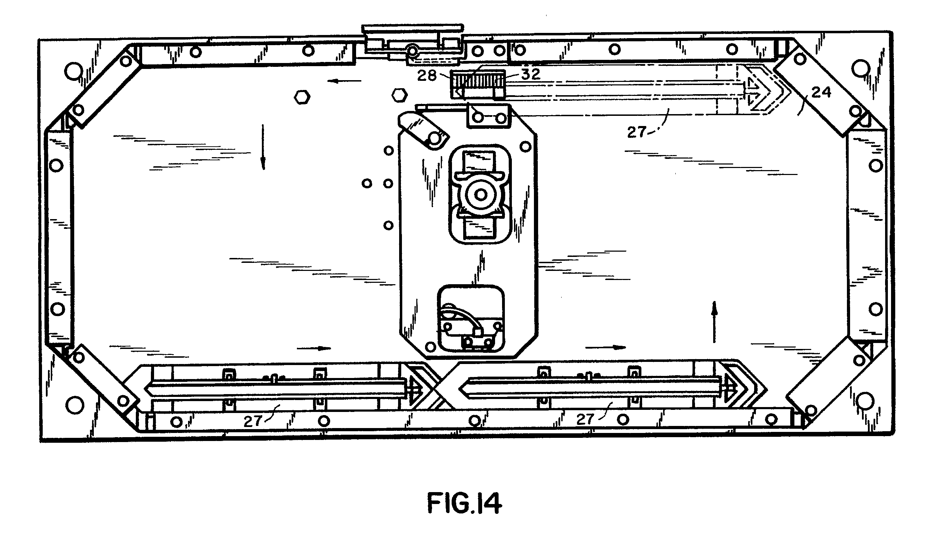

The samples to be successively analyzed are retained on the sample handling means 4. As best seen in FIGs. 14 and 15, the sample handling means 4 includes an open ended sample tray mechanism 24 adapted to receive a plurality of replaceable racks 25. Each rack 25 is adapted to hold a plurality, e.g. six sample containers 26. Preferably, the sample tray 24 is sized to include 13 racks, with each rack 25 holding up to six sample containers for a total of 78 samples. Each rack is carried on a shuttle 27 that is movably positioned on the tray and is keyed to go into it in one direction only. The shuttles 27 are driven by appropriate drive means 28 in a circular path on the tray. The operation of the sample handling mechanism can best be understood with reference to the Allington U.S. Pat. Nos. 3,418,084 and 4,168,955 wherein such mechanism is disclosed and described in detail, and the full disclosures of the sample handling mechanism described therein are incorporated herein by reference.

Preferably, if the sample container takes the form of a sample cup 26a as shown in FIG. 15B, it is provided with a cover 29 having a central aspiration port 30 as shown to minimize sample evaporation. In addition, the entire sample tray mechanism may be covered by a removable cover 31 (shown in positive in FIGs. 1, 2 and 3) to further reduce evaporation. The container may take the form of a test tube-like device 26b (FIG. 15A) in the nature of those marketed under the trademark "Vacutainer" by Becton-Dickinson Company of East Rutherford, NJ. In this- case, a liquid level adjusting and filtering device (not illustrated) such as the one disclosed in the Cassaday, et al. U.S. Pat. No. 4,602,995 may be provided. There is disclosed therein a liquid level adjusting and filtering device operable upon insertion into a container to automatically adjust the level of a liquid as contained in the container to a predetermined, precisely repeatable location. The device is particularly adapted for use in conjunction with test tube-like devices containing whole blood samples which have been separated as by centrifugation into respective blood cell, buffy coat and blood serum layers; and is operable in that context to present blood serum or plasma sample to automated sample analysis systems at the same predetermined and precisely repeatable location relative to the aspirating probe means of such systems.

Sample position is recorded by a computer and the tray mechanism 24 can rotate undirectionally to bring any sample to an aspiration point or station 32. Sensors (not shown) determine when there is a rack on the shuttle and if a rack is a special STAT rack.

An ID reader for the samples may be provided to reduce the chance of error in relating test results to the right patient. The ID reader 33 may be located on the inner island 34 of the tray and scans labels 35 associated with each sample container, preferably at one position before the aspiration point. The ID reader may be selected from one of the many such devices known to those skilled in the art. The reader may have a fixed focal length with some allowed depth of field to be able to read from a curved surface such as a label on a test tube-like container.

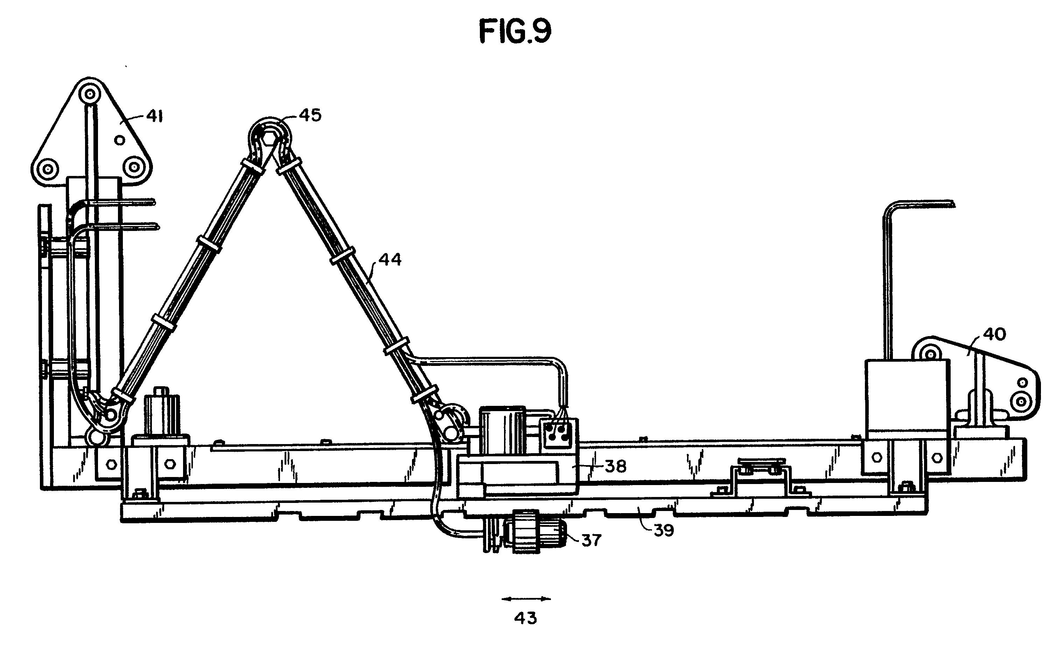

Sample aspiration and dispensing are carried out by the sample aspirating-dispensing means or metering apparatus 5 which includes a sample probe means 36 attached to an "X-Z" transfer mechanism 37. As can be best seen in FIGS. 8 and 9, the transfer mechanism includes a carriage 38 which travels on a rail 39 which is supported above the top of the cabinet 2 by means of supports 40 and 41. The transfer mechanism 37 employs a motor and control for each degree of freedom, X and Z, of the probe. Probe means 36 is adapted, under the influence of the transfer mechanism 37, for vertical reciprocal and for bidirectional translational movement, as indicated by the arrows, 42 and 43, respectively, so as to be selectively positioned over and immersed into a sample container 26 at the sample aspiration station 32. A precise aliquot of liquid sample will thereafter be aspirated into the sample probe means 36 which is operably connected to an appropriate con ventional pumping means which is not illustrated, and thereafter dispensed or loaded into a selected cuvette positioned at the sample addition station 7. Electrical service for the motors and controls, and the conduits for providing hydraulic and vacuum service to the sample probe 36 from non-illustrated sources are referred to generally by reference numeral 44 and are supported by hinged arm 45 as shown.

The aforenoted sample aspirating-dispensing means preferably is designed to allow for the aspiration of a plurality of liquids successively into the probe system, without contamination between the aspirated liquids within the probe system or of the respective sources from which they have been aspirated as is taught in the Reichler, et al. U.S. Pat. No. 4,121, 466, in which case the sample aspirating-dispensing means would include means to coat the probe with a thin film of liquid immiscible with the liquids to be aspirated as is set forth in detail in that patent. The thin immiscible film prevents contamination between segments of successively aspirated liquids and, also, their respective sources.

Furthermore, in order to achieve low sample carryover required for certain assays on the subject apparatus, a new and improved aspirating-dispensing apparatus and method have been developed which are the subject of co-pending U.S. application Serial No. 07/384742 filed 24th Jiily 1 98g entitled "New and improved, Ultra Low Carryover Sample Liquid Analysis Apparatus and Method", filed concurrently herewith and assigned to the common assignee, which apparatus and method may likewise be incorporated into the sample aspirating-dispensing means 5. There is described in that application an apparatus and method wherein an aliquot of immiscible liquid may be aspirated by the probe 36 containing a suitable rinse solution from a reservoir 46 (FIG. 5). After aspiration of the immiscible liquid, the probe 36 is raised, followed immediately by the aspiration of ambient air to form air bubble in the probe. The probe is thereafter lowered into a sample container 26 from which an aliquot of sample is aspirated. The immiscible liquid/air bubble/sample is then dispensed into the reaction cuvette, taking care that a certain portion of the immiscible liquid remains within the probe at the end of the dispensing cycle. The probe 36 then returns to the reservoir 46, and is immersed therein. The remaining immiscible liquid within the probe is discharged into the reservoir. A rinse solution is thereafter passed through the probe to wash the internal passage of the probe thoroughly. The direction of flow through appropriate pumping means, is then reversed, with the rinse solution filled probe then aspirating the immiscible liquid and the procedure is repeated for subsequent sampling.

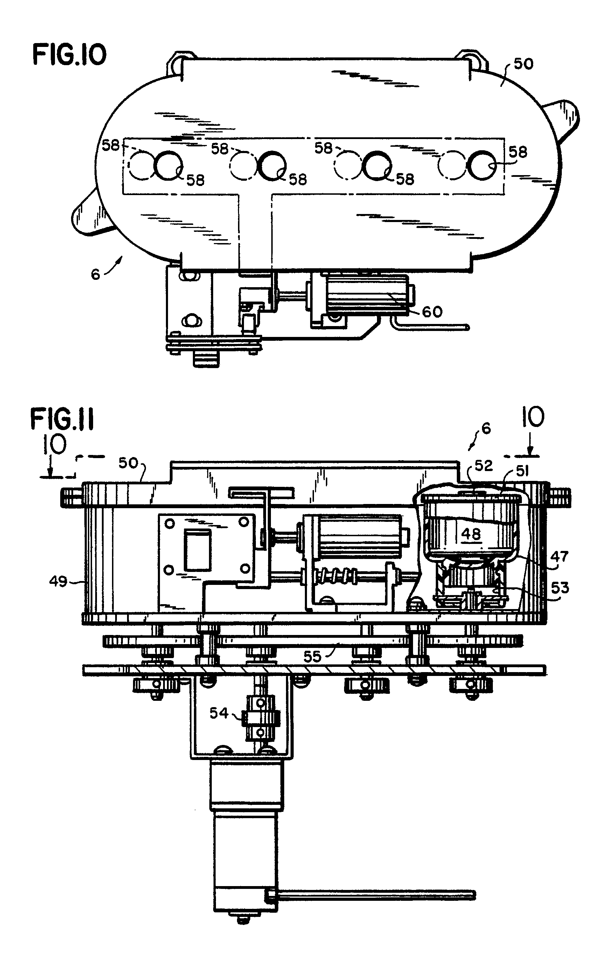

The magnetic particle suspension storage means 6 is located between the sample handling means 4 and the reaction tray compartment 3 along the translational axis of travel of the sample aspirating-dispensing means 5. As best seen in FIGs. 10 and 11, it can accommodate a plurality of containers 47 adapted to contain a liquid suspension 48 of magnetic particles in an aqueous medium.

The magnetic particles preferably are of a selected small size and low relative specific gravity to provide a slow sedimentation rate of the particles from suspension in the liquid medium. The magnetic particles should be capable of migrating freely in the liquid medium and be rapidly immobilized by means of a magnetic field, so that when drawing them to the side or bottom of the reaction cuvette by a magnetic field, a clear unbound constituent or supernatant is rapidly obtained for optical analysis. In the absence of such a magnetic field, the particles should disaggregate and disperse easily and rapidly in suspension in the liquid medium. In other words, the particles should exhibit high magnetic permeability and low magnetic remanence. It is the ease of repeated magnetic sedimentation and resuspension which makes possible, performance of the various assays described hereinbelow. The magnetic particles may, for example, take the form of those disclosed in our European Specification no. 0180384, and may be in the form of a substantially spherical, polymeric matrix having a magnetically responsive substance dispersed therein.

With continued reference to FIGs. 10 and 11, the magnetic particle suspension storage means 6 includes a compartment 49 having a removable cover 50 for ease of access to the containers 47 therein, and to prevent evaporation of the aqueous medium. In addition, and to further reduce evaporation, each container 49 may be provided with a cover 51 having a central aspiration port 52 therein (FIG. 12). Since the magnetic particles are heavier than the aqueous medium, they should be constantly agitated to maintain a homogeneous suspension for aspiration. Each container 49 is adapted to be placed or seated on a carrier 53 that is adapted to spin back and forth under the influence of a drive motor 54 and transmisgion arrangement 55 to generate turbulence within the container to maintain a uniform suspension. Optionallyl a plurality of fins 56 may be provided on theinside wall 57 of the container, as shown in FIG. 11, to provide additional agitation. A shutter mechanism 58 is incorporated into the cover 50 and serves to selectively close access ports or openings 59 in the cover. The shutter mechanism 58 is operated by actuator means 60 from a first position in which the openings 59 are closed, to a second position in which they are open to allow passage of the tip of a probe, such as sample probe 36 therethrough fcr access to the contents of one of the containers 47, so that the magnetic particle suspension may be aspirated and dispensed by the sample probe 36 into a cuvette at the sample addition station.

In the event magnetic particles of varying properties are needed for particular assay protocols, means may be provided for identifying the location and contents of the containers 47 in the compartment 49. For examplel appropriate conventional, positive identification/location means may be provided in association with each container, e.g. optical readers and bar codings which will provide signals representative thereof to the appropriate system control software. Alternatively, the system control software can be programmed for the identification/location of the various differing magnetic particles in a manner well known to those skilled in the art.

It will be readily apparent to one skilled in the art that the magnetic particle suspension in one or more of the containers 47 may be replaced with other material that may be required for some of the assays to be performed. For example, in order to reduce interferences in certain assays, it may be desirable to provide, on a selective bag is, access to a liquid buffer diluent which is to be added to the sample and magnetic particle suspension at the beginning of the assay, prior to the addition of one or more reagents. To this end, one of the containers 47 bay be filled with such a buffer diluent which, depending upon the particular protocol to be followed, may be aspirated either before or after the probe 80 aspirates the sample as hereinabove described. Clearly, this sequence of aspiration is given by way of example only, and if desired, may be modified to accommodate the particular assay protocol. Particular various aspiration sequences are described in the aforenoted co-pending U.S. application Serial No. 07/384742, discussed hereinabove and are incorporateu herein by reference.

Liquid reagents, including latex particle suspensions, required for the various assays are stored in a reagent storage compartment 61 disposed at the reagent supply station 8 adjacent to the reaction tray compartment 3, and as best seen in FIG. 13, a reagent tray 62 is included which is adapted for bidirectional rotational motion through a short path seeking algorithm by conventional drive means (not shown) to selectively position an appropriate reagent-containing dispenser 63 below a reagent aspirating-dispensing probe means 64. The dispensers 63 may be of the types described in U.S. Patent Nos. 4,515,753 and 4,774,057.

In the Smith, et al. U.S. Pat. No. 4,515,753, the reagent dispenser is provided with a reagent dispenser well having an opening adapted to present a liquid reagent for withdrawal therethrough and means to position a lens of liquid immiscible with the reagent between the reagent and the opening of the well. For example, the dispenser can have suitable dimensions and an inner surface which combine with the wetting characteristics of the reagent to form a concave reagent meniscus suitable to reliably position a lens of immiscible liquid thereon. The lens so formed is centrally located by the concave shape of the meniscus.

The reagent dispenser described in the above-noted Uffenheimer, et al. U.S. Patent 4,774,057 is a dual liquid dispenser package which is operable to supply liquids from liquid supply chambers to liquid reservoirs through liquid supply channels by centrifugal force. Induced liquid displacement can flow attendant dispenser package rotation, and is particularly adapted for use in the supply of two reagent liquids to automated sample liquid analysis systems.

Obviously, other suitable liquid reagent dispenser constructions may readily come to mind of those skilled in the art and can be incorporated into the present invention.

Each of the dispensers 63 is releasably retained on the reagent tray 62 to allow for ready replacement of empty dispensers or for repositioning of the various reagent dispensers therein. For example, each reagent dispenser 62 may be nested between a series of radially extending raised projections or ribs 65 and 66 which functionally engage the side walls of the base of dispenser 62 at points 67 and 68 respectively as shown. In addition, ribs 69 may be provided which are received in slots 70 to further restrict movement of the dispenser 67 and 68 respectively.

As shown in FIG. 13, the reagent tray 62 may be adapted to carry or retain 22 such dispensers, however, it would be readily appreciated by those skilled in the art that the number of reagent containers may vary and is directly influenced by the number and type of assays which are to be performed by the apparatus.

The reagent aspiratingdispensing means 64 includes a probe 71 which is adapted, under the control of a suitable conventional drive mechanism (not shown) for vertical, reciprocal movement and for bidirectional, rotational movement so as to be selectively positioned over and immersed into the reagent reservoir or well 72 in the appropriate reagent dispenser 62 brought below the reagent aspirating-dispensing probe means, and into a reaction cuvette selectively advanced into the reagent supply station. Reagent probe means 71 operates in conjunction with associated pump means (not shown) to aspirate a precise volume of reagent contained in such well and dispense or load the same into such cuvette.

Preferably, the reagent storage compartment 61 is enclosed by an insulated cover 73 and is cooled by an appropriate refrigeration means (not shown) to a temperature from about $3°$ to $7°$ C.

To reduce reagent loss through evaporation, access to a particular reagent dispenser well 72 is achieved through a selectively operable access port 74 in the reagent cover 73. The access port 74 is normally closed by a shutter 75 which is operable, under suitable drive and control mechanisms identified generally by the reference number 76 to be displaced from the access port, allowing the probe 71 to be lowered into the well 72 for aspiration of an aliquot of liquid reagent therefrom. Optionally, each reagent well 72 may be provided with its own shutter or cover (not shown) in addition to, or as an alternative to, the shutter mechanism 75.

An ID reader of conventional design and construction may be provided and located on the periphery of the reagent tray 62 to read an ID label associated with each reagent dispenser. Access to the reagent dispenser in the reagent storage compartment is through hatch 77 in the tray cover 73. The opening of the hatch 77 is sensed go that whenever a reagent dispenser is added or is replaced on the reagent tray, the tray can be scanned by the ID reader to update the on-system reagent inventory.

The reagent aspirating-dispensing probe means 164 may take the general form of those disclosed in the Reichler, et al. U.S. Pat. No. 4,121,466 in which case the probe means 71 would include means to coat the same with a thin layer of isolation liquid as set forth in some detail in that patent, the disclosure of which is hereby incorporated by reference in this specification. As described therein, such probe is normally filled with a pilot fluid which is immiscible with an aqueous liquid, i.e. reagent, to be aspirated and dispensed. Also, an immiscible liquid is flowed downwardly at a controlled rate, over the outer probe surface, to coat and prevent contact of such surface with the liquid to be aspirated. Accordingly, contamination is positively avoided between the successive liquids, by the sample or reagent into which the probe is immersed. During the aspiration and dispense cycles, flow of immiscible liquid over the probe surface may be discontinued.

Inasmuch as the reagents are delivered from a refrigerated environment to the reaction tray which is preferably maintained at 37° C, appropriate reagent heating means may be provided in conjunction with the reagent aspirating-dispensing probe means 64 to preheat the aspirated liquid reagent prior to its being dispensed into the reaction cuvette.

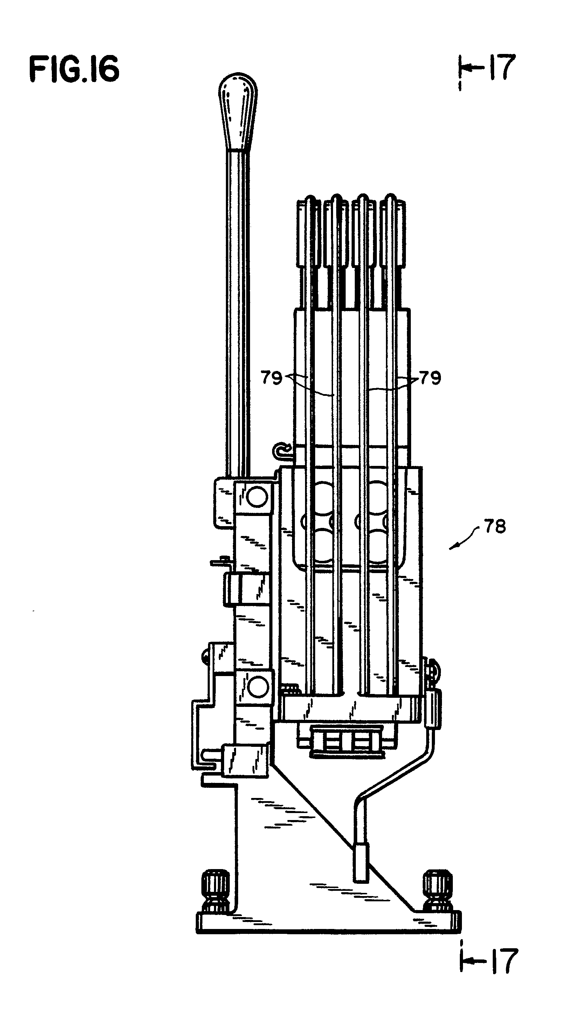

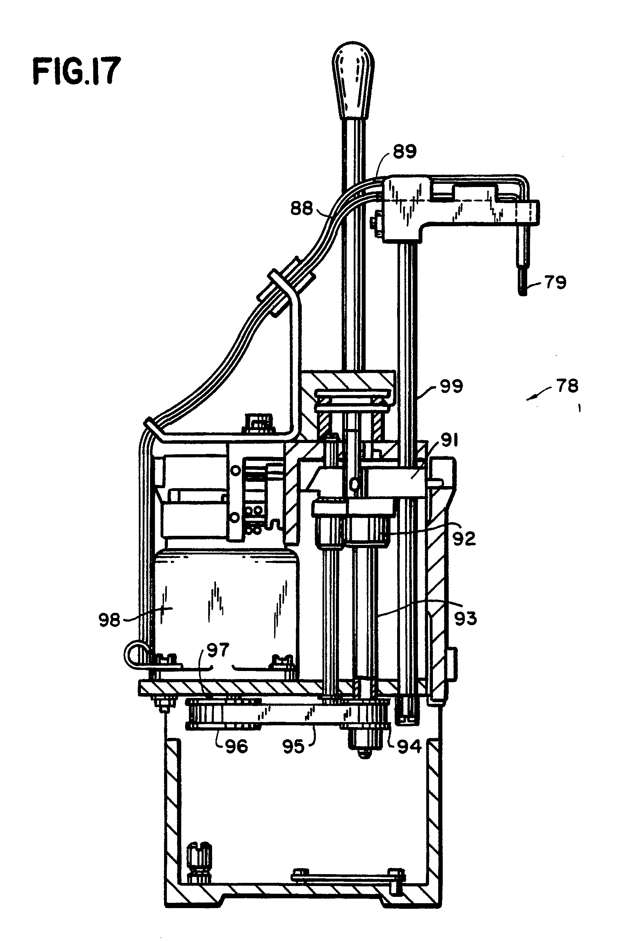

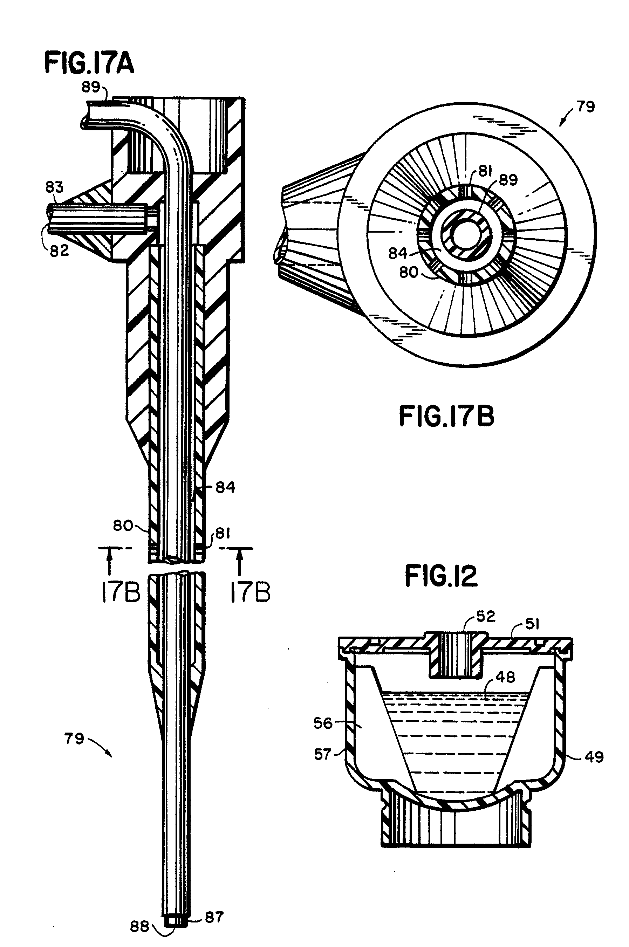

A particle wash station 9 is provided and, in order to optimize assay protocol flexibility, ig located 28 cuvette positions away from the reagent addition gtation 8. As shown in FIGs. 16, 17, 17a and l7b, the particle wash station includes a wash stand 78 which has a plurality of probes 79 comprising concentric dual tubes. Preferably, four probes are provided. The outer tube 80 is sealed and has a series of openings 81 at such a height and direction that when the probe is inserted into a selected reaction cuvette in the wash station as will hereinafter be described a wash liquid 82 supplied through conduit 83 under pressure by suitable pumping means (not shown) into the outer chamber 84 sprays the internal walls 85 and 86 (FIG. 7a) of the cuvette to wash the supernatant from the solid phase. It will be appreciated that while only two walls of the cuvette are illustrated in FIG. 7a, the remaining two walls of the cuvette are also washed by the wash liquid forced through the openings 81. A longer, inner tube 87 extends to the bottom of the cuvette as illustrated. The inner tube 87 is open at its end 88 and is connected to a vacuum line 89 to draw off the wash liquid and supernatant mixture. Magnets 90 are located on the sides of the cuvette and draw the solid phase to the sides 85 and 86 to allow the wash probes 79 to enter the cuvettes, wash and aspirate the wash liquid and supernatant without removing the magnetic solid phase. Preferably, these magnets generate a field of three to five kilo Gauss and may be of a permanent, rare earth or electromagnet construction. The field may be constant in the case of permanent magnets or switchable, i.e. on/off, either by physically separating the magnets from the cuvette to eliminate the effects of the magnetic field or in the case of electromagnets stopping the current. Neodymium-iron-boron magnets are preferred for the permanent magnetic embodiment.

As can best be seen in FIG. 17, the wash stand 78 includes appropriate vertical translational displacement means associated with each of the probes 79 to accomplish the aforenoted vertical insertion and withdrawal of each probe with respect to a particular cuvette positioned beneath it in the wash station. The wash station 78 includes a carriage 91 provided with a gear arrangement 92 which operatively engages a lead screw 93. The lead screw 93 carries a toothed pulley 94 which is engaged by a toothed drive belt 95 driven by a toothed drive pulley 96 carried on a shaft 97 of a reversible motor 98. As the lead screw rotates, in either a clockwise or counterclockwise direction, the carriage 91 rides either vertically upwardly or vertically downwardly resulting in each probe 79 attached to the carriage 91 by a support column 99 moving accordingly. Appropriate conventional position sensing means (not illustrated) are provided to control the operation of the motor, or appropriate software control may be provided to limit the degree of travel of the carriage 91. It is desirable that each probe of the wash station be moved vertically independently so cuvettes that have turbidimetry assays or those that are in a first tray turn of a long protocol can be skipped during a particular wash cycle. Accordingly, appropriate mechanical engagement means (not illustrated) may be associated with each support column to allow it to be operatively engaged or disengaged from the carriage 91.

The configuration of the various probes 79 in the particle wash station can be varied to accommodate various protocols. For example, with reference to FIG. 18, there is illustrated one configuration in which a first probe 79a is spaced one cuvette position away from probes 79b, 79c and 79d. In this configuration, a particular cuvette will enter the cuvette wash station at a first position and probe 79a will be inserted therein. The wash solution will then wash the bound solid phase constituent with the wash solution and the unbound constituent or supernatant being thereafter removed therefrom. However, before the probe 79a is removed from the cuvette, a second portion of wash solution will be delivered to the cuvette. This solution will not be aspirated, however, but will remain in the cuvette. In the next cycle, the cuvette will move into a second wash station position between probes 79a and 79b. Accordingly, the solid phase will be immersed in the wash solution for an extra cycle. The cuvette then is moved into a third, fourth and fifth position, below probes 79b, 79c and 79d, in succession, where the wash solution is sprayed into the cuvette, and the resultant liquid is removed.

At each stop, therefore, various cycles of aspiration and wash can be performed. For example, in addition to the above wash protocol, the fourth probe 79d need not deliver wash during the second wash cycle so that the reaction cuvette is left without liquid for two cycles after which substrate is dispensed thereto by the substrate probe as will be described.

The wash cycle is software-controlled with valves opened or closed for the length of the vacuum and wash dispensing actions.

The wash solution may be a pH buffered protein containing aqueous solution, in which ion the buffer may be TRIS and the protein may be BSA.

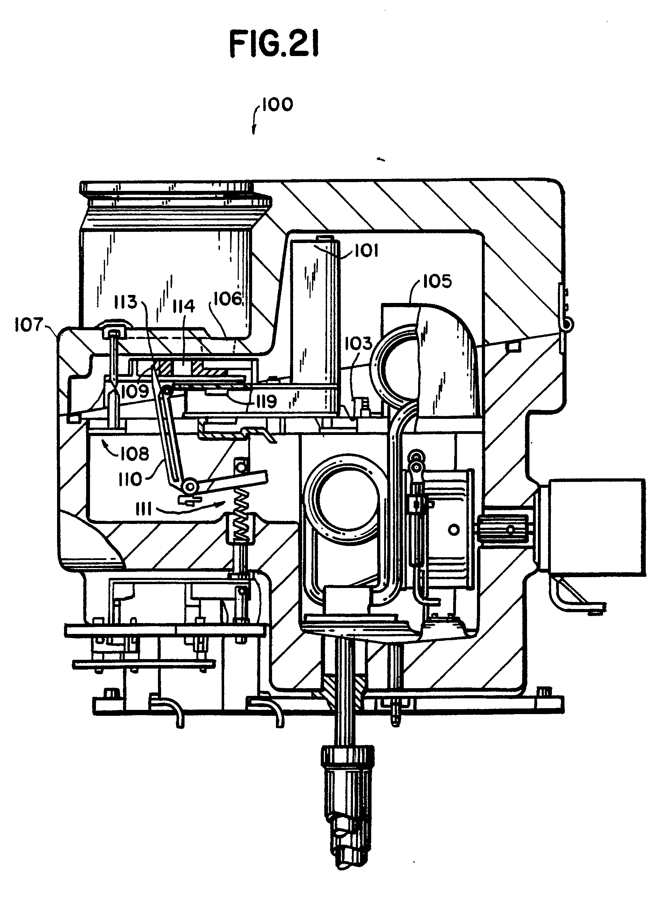

A substrate storage compartment 100 is disposed adjacent to the reaction tray compartment at the substrate station. With reference to FIGs. 20 and 21, the substrate storage compartment 100 includes a plurality of liquid substrate dispensers 101 which are releasably positioned on a stationary tray 102. As best seen in FIG. 20, a spring means 103 associated with each dispenser urges the same into a seat 104. The compartment 100 is insulated and cooled by appropriate refrigeration means 105 which may be similar to that used to cool the reagent tray discussed hereinabove. A series of aspiration ports or holes 106 are provided in the insulated compartment cover 107, each of which is selectively closed by an individually controlled shutter mechanism 108 to reduce evaporation of the liquid substrate from the containers and to prevent condensation from entering the container. The shutter mechanism 108 includes a cover plate 109 displaceable by the selected operation of a lever arm 110 which is part of an operating mechanism 111 to open the port 106 above a substrate well 119 in a dispenser 101 located below the port 106.

The shutter mechanism can best be seen with reference to FIG. 24 wherein each cover plate 109 is shown slidably received within a frame supported on the compartment cover 107. Each cover plate 109 is normally biased by a spring means 112, e.g. coil spring, into a position wherein the access port 106 is closed. Displacement of the lever arm 110 which engages surface 113 of the cover plate causes the cover plate to move against the spring means until such time as the passage 114 in the cover plate is aligned with the access port 106.

A typical substrate dispenser 101 is shown in FIG. 22. It is similar in construction to the reagent dispenser in that it is adapted to retain and dispense liquid substrate from liquid supply chambers to liquid reservoirs or wells. The substrate dispenser 101 is provided with a slidable cover plate 115 which acts to selectively seal the substrate well therein to further prevent evaporation of the liquid substrate. The lever arm 110 acts to displace the cover plate 115 from a position wherein the reagent well is covered to a position wherein the opening 116 is brought into registry over the reagent well. As shown in FIG. 21, the lever arm acts to displace the cover plates 110 and 115 substantially concurrently. The cover plate 115, as with cover plate 110, is normally biased into the closed position by an appropriate biasing means.

A substrate aspirating-dispensing means 117 includes a substrate probe 118 adapted, under the control of appropriate drive means (not shown) for vertical, reciprocal movement for directional rotational movement, so as to be selectively positioned over and immersed into the substrate reservoir 119, and into a cuvette selectively advanced to the substrate station. The substrate aspirating-dispensing means includes appropriate aspirating means (not shown) connected to the probe 118 allowing the latter to operate to aspirate a precise volume of substrate contained in such well and to dispense or load the same into such cuvette. Preferably, reagent probe 71 and substrate probe 118 are of the same construction and operate in a substantially identical manner.

The contents of each reaction cuvette are optically analyzed, in turn, at the reaction read station 11 to quantitate the particular analyte for which the contained sample has been analyzed. A modular design concept is used that incorporates fiber optics to link the light source to the optical measurement station, and provides turbidimetric, colorimetric, fluorescence and luminescence measurement capabilities to support various homogeneous and heterogeneous assay technologies, e.g. magnetic particles, latex agglutination.

One possible combined optical configuration is shown schematically in FIG. 25 and is identified generally by reference numeral 120 and is designed for random access, concurrent assay diagnosis to be performed for turbidimetric, colorimetric, fluorescence and luminescence assays as follows:

## A) Turbidimetry and Colorimetry

The configuration includes a colorimeter-turbidimeter illumination means 121 comprising a light source 122. The light source 122 preferably is a 100-watt tungsten halogen lamp. The wavelength is selected by a filter wheel 123 controlled by a drive means 124, e.g. a stepping motor. The filter wheel is provided with appropriate filters allowing for a variety of wavelengths such as, for example, 340, 405, 450, 492 and 600 nm. The incident light beam is focused through a lens arrangement 125 within the illumination means 121 to impinge on the end 126 of a fiber optic 127. The fiber optic 127 is bifurcated to split the light signal into a sample channel 128 and a reference channel 129 for further processing. Preferably, the sample channel carries approximately 90% of the light received at end 126, with the reference channel carrying the remaining 10%.

The sample channel 128 transmits the light to the optical system 130 which includes a series of optical components to concentrate, guide and focus the light beam in the optical system through the cuvette positioned in the reaction read station, and to ultimately impinge on the input end 131 of a second fiber optic 132. The beam is focused by lens means 133 to pass through the pinhole orafice 134 of an epi mirror 135 and irradiate the reaction mixture contained in a cuvette 136. In turbidimetric assays the incident light is scattered by the reaction mixture and that fraction of the scattered light collected by the optical system is detected and measured. In colorimetric assays, the incident light is absorbed by the reaction mixture resulting in a reduction in the intensity of the incident beam. In both cases a photodetector means 137 measures the resultant light collected at end 131 after interaction (scatter or absorption) with the reaction mixture. The detector 137 converts the optical signal to an electrical signal that is then amplified by amplifier 138 and quantified by standard electrical components, e.g. multiplexer 139, analog/digital converter 140, and sent to a computer 141 for additional processing. The reference signal is recorded and processed through reference diode 142, amplifier 143, multiplexer 139 and analog/digital converter 140 with the sample signal in a conventional manner.

## B) Fluorimetry

In this option, the system may incorporate the illuminator means 121 or optionally, may utilize a different system as shown. In the latter case, the illuminator means 141 would include a light source 122a which may be an incandescent 1amp, an arc 1amp or a laser. The light beam is passed through a lens and filter arrangement 142b onto the end 144 of an appropriate quartz fiber optic 145. 'The light is transmitted through the fiber optic to the optical system 130, again passing through the pinhole 134 in epi mirror 135 and impinging upon the reaction mixture in the cuvette 136. The incident light is absorbed by the fluorescent material present in the cuvette. Light of a second, longer wavelength is emitted by the material. The portion of this reemitted signal that emmanates approximately 180° to the incident beam is collected in an annular manner and focused through lens means 146, reflected by the epi mirror and through lens means 147 to the end 148 of a third fiber optic 149. The light is transported to a photomultiplier (PMT) tube 150 for opto-electronic conversion and then for further amplification and digital quantification by amplifer 151, multiplexer 139 and analog/digital converter 140. If extreme sensitivity is desired, the amplifier 151 may be a fast, wideband amplifier with threshold capability allowing photon counting to be employed. The reference signal is processed as discussed above.

## C) Luminescence

Luminescence requires no illuminator. The light is generated by the chemical reaction in the reaction mixture in the cuvette and only the collection system like that of the fluorescence system is needed. That is, the light is focused through lens means 146 reflected by mirror 135 and through lens means 147 to the fiber optic 149. A photomultiplier tube 150 receives the optical signal and the signal is processed as described earlier for the fluorescence signal.

In order to perform the various optical measurements discussed herein, magnets 151 similar to magnets 90 are placed under the reaction tray before and at the reaction read station 11, preferably extending for 11 cuvette positions before the actual read stop. When reading magnetic particle assays, the cuvette being read is brought over the magnets and stays there for the length of a full stop, approximately 6 seconds. This allows enough time for the magnetic particles to be pulled out of the optical path. The tray then indexes to read the 11 cuvettes.

Passage of the tray through the magnetic field within the particle wash station between optical readings and the mixing motion of the tray act to resuspend the magnetic particles after the cuvette leaves the reaction read station.

Prior to the sample addition station, the cuvette is cleaned to ensure that all the previously added materials have been removed prior to adding a new sample. The cuvette wash station 12 is positioned 80 cuvette positions away from the reagent addition station 8 to assure completion of the longest turn protocol before the wash. The cuvette wash station provides clean cuvettes for reuse in the next assay. It is identical in design to the particle wash station 9 as it includes a series of probes (FIG. 19) adapted for insertion into the reaction cuvette, spraying a wash solution into the cuvette to wash the interior of the cuvette, and aspiration of the contents of the cuvette to cleanse the same. The wash solution consists of a formulated aqueous solution including a surfactant, and there is no magnetic field at the cuvette wash station. The last probe leaves the cuvette almost dry and the residual liquid evaporates by the time the cuvette arrives at the sample addition station to commence the next assay.

Each probe 79 of the wash station can be moved up and down independently so that cuvettes that are in the first tray turn of a long protocol can be skipped.

The system configuration allows for the possibility of using either wash station as both the particle and cuvette wash when the cycle time permits. Again, valving determines the appropriate wash solutions and durations. The magnetic field maybe turned "on" during the particle wash and turned "off" during the cuvette wash.

A computerized control system coordinates movement and operation of the various components of the apparatus to perform the desired assay protocols. With reference to FIGs. 26 and 27, the system software is identified generally by the reference numeral 152 and can be thought of as including three major modules -Machine Control 153, User Interface 154 and Data Analysis 155. These modules mutually interact with each other and are controlled by a supervisory module 156. A communications software package 157 may be linked to the supervisory module providing a two-way transfer of information from the instrument to a host laboratory computer.

The normal flow of operation is initiated at the User Interface Module 154 where the operator inputs an assay worklist. This worklist coupled with a multitude of other inputs (chemistry, protocol, reagent, etc.) described below, is manipulated to form the Cycle Event Control Table of the Machine Control Module 153. The table is a coalescence of all the information necessary to run an assay at the instrument cycle level; that is, this matrix specifies what actions must be taken for each sample during each and every tray cycle of the assay. As each sample cuvette is rotated to an appropriate event position, the Cycle Event Table determines if an event (action to be taken) will or will not be activated during the tray cycle. For example, the Cycle Event Table may specify that events A, B and C be activated during a particular cycle such that the appropriate cuvette may receive aliquots of sample and magnetic particle suspension (event A) while another cuvette may be washed (event B) and a third cuvette may receive reagent (event C). When the reaction tray is not stopped for an event, it is constantly mixing the reaction mixture in the cuvettes. Each event is triggered by the machine control software and implemented by the schedulers. The scheduler controls a series of devices dedicated to performing the specific events. The Cycle Event Table produces the schedule of events for the subsequent tray cycle and the procedure is repeated. Finally, the results of the optical read are sent to the Data Analysis software module for processing. A description of each major module appears below.

A) User Interface

The User Interface Module consists of a menu, screen and prompt driven visual displays 158 that lead the operator through the instrument set up, worklist generation, assay/instrument processing and final results presentation.

9) Machine Control

General

The apparatus can be operated in an Exercise mode or in a Run mode. In the Exercise mode, the user chooses a device or a group of devices to exercise from an entry screen. Error-trapping routines are invoked if a failure is detected.

In Run mode, which is an unattended execution of a worklist, the machine control software is based on a table-driven scheme. This will be described in the rest of this section together with the handling of STATs.

## Chemistry-Related Inputs

The first input is the analysis to be performed on each sample. The second input is a Chemistry Table 159 which contains all the chemistry-related parameters, such as sample and reagent volumes, particle type, number and frequency of air bubbles for aspiration and delivery of reagents and substrates, substrate type, filter wavelength, rate and standard curve algorithms, number of standards and a protocol number. This number refers to a Protocol Table 160 which contains the offsets in cycles from sample delivery for particle, reagent and substrate delivery, wash probe actuation and all optical readings.

Yet an additional input is a reagent positions table 161 which correlates a reagent position on the reagent tray to a chemistry identifier.

## The Cycle Event Table

When the instrument runs, the information in the worklist, reagent positions, chemistry and protocol table is combined into a cycle event table 162 in which each line contains all the information relevant to a particular tray cycle. From the worklist, the next test is picked up and sample ID and volume is placed in the appropriate column of the next cycle. The chemistry number in the worklist identifies the reagent positions, chemistry parameters and protocol. Then if, for example, the protocol determines that $R_2$ is dispensed 32 cycles after sample addition, the $R_2$ position, volume and air bubble information is placed in the appropriate columns 32 lines below the next cycle line of the table. The same goes for all reagent and particle deliveries and washes, where all parameters are filled up in the appropriate table columns using downward line offsets as determined by the protocol table.

In actual running, the current cycle is executed from the information in the current cycle event table line by combining information from it with the task timing tables into a machine control scheduler described below, while other rows and columns of the cycle event table are updated for the next sample to be picked up.

When a STAT sample has to be run which is a sample that was not pre-programmed in the original work list, the software is able to rearrange the cycle event task to accommodate this sample.

## Machine Control Scheduler

As will be apparent after reading the above description of the apparatus, the instrument has a multiplicity of controllable devices, e.g. motors, solenoids, pumps, valves, sensors and the colorimeter reading electronic circuitry, which can be grouped into the following logical tasks:

Reaction tray (includes optics)
Sample probe
Sample tray
Reagent handling
Substrate handling
Particle wash
Cuvette wash

Each such task has a task timimg table 163 associated with it. A line in that table consists of the following information elements:

1. Device name
2. Time for action
3. A one-letter command character that calls up a device driver routine. A valve may have O for "open" and C for "close". Stepper motors may have few commands depending on the motion profiles programmed in their respective microcontrollers.
4. A parameter field for stepper motors or bitmapped devices such as wash station probes which determines the extent of motion under a given profile or which devices in the bitmap are active. For example, the sample probe can go to seven preassigned positions on its horizontal move, or the first two of the four probes of a wash station will wash while the other two will not. This field is filled dynamically while running, through information stored in the cycle event table 162.

5. Two tags associated with the random-access pickup of actions to be performed. One tag serves as an index for finding the action to be executed in the table, the other is used in determining if this action will be executed. All the possible combinations of conditional execution are preprogrammed. For example, actions that happen when $R_1$ and $R_2$ are delivered simultaneously can be distinguished from actions that happen in sequential reagent addition.

6. An error handling tag which calls for specific error handling routines in case an error occurred while trying to execute that command.

The scheduler 164 is a software control module that executes the information in the task timing table. During a run, the time elapsed since the start of the cycle is compared to the time in the task timing table 163. When they match and the execution flag is on, the device port number is called and the command and optional parameters are sent to the port to perform the desired action.

Error Handling

Errors detected are sent as an error code to a high-level software module 165 that decodes the error, displays an error message, updates the error log and follows up with appropriate action. Depending upon the severity of the problems the action can go from a display of an informative message, an execution of error recovery routine or a partial or complete shutdown of the instrument.

Four types of errors are recognized by the software:

1. Machine control related, where mechanisms fail to move to assigned positions, covers are not in place or a failure reported by dedicated diagnostic circuitry.

2. Computer hardware related, such as disk drive failure, parity errors and the like.

3. Operator errors, such as inputting invalid values, trying to exercise while running, etc.

4. Out-of-range optical readings and assay results.

C) Data Analysis

The optical readings at the colorimeter result in an optical density value associated with each reading. The data analysis at 514 and includes:

a. Determination of rates or end point values for calibrators and patient samples.

b. Establishment of standard curves.

c. Calculation of concentration of analytes in clinical samples based on these standard curves.

Having thus described the major components of the automated analytical analyzer embodying our invention, we will now discuss, in detail, the various assay protocols followed by the automated analytical system.

Preferably, the analytical analyzer is capable of 120 test/hour which translates to a reaction tray movement or increment of one cuvette every 30 seconds which is referred to hereinafter as the "tray cycle". A given cuvette in a 100-cuvette reaction tray will be advanced through a given protocol and will be available for another assay after 50 minutes. This is referred to as the "tray turn". It will be appreciated by those skilled in the art that by varying the cycle time, the throughput of the apparatus can be increased or decreased accordingly, depending on the assay protocols practiced.

During each tray cycle, the reaction tray performs an identical set of motions regardless of the assays being run. Random access analysis using various assay protocols in any sequence is achieved by selectively controlling the devices that operate in a given cycle.

The possible tray motions are: (i) mixing, which is a vigorous motion; (ii) indexing of the reaction tray a selected number of cuvettes at a time, which positions cuvettes one at a time in the reaction read station; and (iii) slewing, which is a smooth rotation of the tray.

The reaction tray stops three times in a cycle at different positions. There are two long stops, A and B, of about 6 seconds and one short stop (stop P) of about 2 seconds. The following events may occur during a stop:

Stop A:

a) $R_1$ and $R_2$ dispensed for a simultaneous addition assay; and/or

b) $R_1$ dispensed for a sequential addition assay; and/or

c) magnetic particle wash 15 minute magnetic separation assay (MSA); and/or

d) substrate dispensed for 15 min. MSAs.

Stop B:

a) sample dispensed; and/or

b) magnetic particles dispensed; and/or

c) $R_2$ dispensed in a sequential addition assay; and/or

d) magnetic particle wash for 30 min. MSA; and/or

e) substrate dispensed for 30 min. MSA; and/or

f) cuvette wash.

Stop P:

Magnetic particles added or second sample addition after 21 min. from the first sample addition.

The tray performs an indexing five times in a cycle to do optical readings as follows:

a) 8 readings after $R_1$ is dispensed;

b) 11 readings after substrate is dispensed for 15 min. MSAs;

c) 8 readings after $R_2$ for supplemental assays is dispensed;

d) 3 readings after second sample is dispensed;

e) 11 readings after substrate is dispensed for 30 min. MSAs;

The time consumed in execution of a particular combination of the possible actions described above is some fraction of the cycle time. The remaining time is allocated to mixing. This allocation of time is optimized for the assay portfolio available.

The combination of the tray motions described above and the fact that the tray increments one cuvette every cycle, e.g. 30 seconds, results in a given cuvette experiencing any of the following events:

| cycle | time (min) | event |
|---|---|---|
| 1 | 0.5 | sample dispensed |
| 1 | 0.5 | particles dispensed |
| 2 | 1.0 | $R_1$ dispensed for sequential assays |
| 2 | 1.0 | $R_1$ and $R_2$ dispensed for simult. assays |
| 3-10 | 1.5- 5.0 | 8 readings for turbidimetric assays |
| 29-32 | 14.5-16.0 | particle wash for 15 min. MSAs |
| 32 | 16.0 | $R_2$ dispensed for sequential assays |
| 33-40 | 16.5-20.0 | 8 readings for turbidimetric assays |
| 35 | 17.5 | substrate dispensed for 15 min. MSAs |
| 36-46 | 18.0-23.0 | 11 readings for 15 min. MSAs |
| 42 | 21.0 | delayed particle addition for MSAs second sample addition for turbidimetric assays |
| 43-45 | 21.5-22.5 | 3 readings for assays requiring second sample addition |
| 59-62 | 29.5-31.0 | particle wash for 30 min. MSAs |
| 65 | 32.5 | substrate dispensed for 30 min. MSAs |
| 66-76 | 33.0-38.0 | 11 readings for 30 min. MSAs |
| 81-84 | 40.5-42.5 | cuvette wash |

For long protocols requiring two or more tray turns, the cuvette wash step is skipped and multiples of 100 can be added to the number of cycles, resulting in adding multiples of 50 minutes to the corresponding times. The ability of having multiple tray turns allows the use of more than two reagents or several wash and reading steps for more complex assay protocols.

The instrument motion control software may select any combination of these events to achieve a full random access for running any sequence of assays.

The following are representative assay protocols which can be performed on the apparatus of the present invention. These are presented for illustration purposes only and should not be considered as all inclusive of the range of protocois that can be run. Unless otherwise noted, $R_1$ is typically a conjugate of the analyte and latex particles, and $R_2$ is an antibody to the analyte.

a) Latex simultaneous addition assays for the detection of analytes such as phenytoin, phenobarbital tobramycin, gentamycin theophyllin, TBG:

| cycle | time (min) | event |
|---|---|---|
| 1 | 0.5 | sample dispensed |
| 2 | 1.0 | $R_1$ and $R_2$ dispensed |
| 3-10 | 1.5- 5.0 | 8 readings |
| 81-84 | 40.5-42.5 | cuvette wash |

b) 15 minute simultaneous addition MSA to determine T-uptake:

| cycle | time (min) | event |
|---|---|---|
| 1 | 0.5 | sample dispensed |
| 1 | 0.5 | particles dispensed |
| 2 | 1.0 | $R_1$ and $R_2$ dispensed |
| 29-32 | 14.5-16.0 | particle wash |
| 35 | 17.5 | substrate dispensed |
| 36-46 | 18.0-23.0 | 11 readings |
| 81-84 | 40.5-42.5 | cuvette wash |

30 minute simultaneous addition MSA with delayed particle addition for analytes such as TSH, LH, B-HCG, ferritin:

| cycle | time (min) | event |
|---|---|---|
| 1 | 0.5 | sample dispensed |
| 2 | 1.0 | $R_1$ and $R_2$ dispensed |
| 42 | 21.0 | delayed particle addition |
| 59-62 | 29.5-31.0 | particle wash |
| 65 | 32.5 | substrate dispensed |
| 66-76 | 33.0-38.0 | 11 readings |
| 81-84 | 40.5-42.5 | cuvette wash |

d) 30 minute sequential addition MSA with delayed particle addition for T3:

| cycle | time (min) | event |
|-------|-----------|-------|
| 1 | 0.5 | sample dispensed |
| 2 | 1.0 | $R_1$ dispensed |
| 32 | 16.0 | $R_2$ dispensed |
| 42 | 21.0 | delayed particle addition |
| 59-62 | 29.5-31.0 | particle wash |
| 65 | 32.5 | substrate dispensed |
| 66-76 | 40.5-42.5 | cuvette wash |

e) Specific proteins:

The specific proteins assay is an end point assay where sample and $R_1$ are first read for a reagent blank determination. After $R_2$ is added, turbidity develops and is read, then the reagent blank is subtracted from it to provide the final signal If sample has to be added for excess antigen determination, another reading takes place after that addition. Each such reading consists of three measurements which are averaged.

| cycle | time (min) | event |
|-------|-----------|-------|
| 1 | 0.5 | sample dispensed |
| 2 | 1.0 | $R_1$ dispensed |
| 3- 5 | 1.5- 2.5 | 3 readings for reagent blank |
| 32 | 16.0 | $R_2$ dispensed |
| 33-35 | 16.5-17.5 | 3 readings for turbidity |
| 81-84 | 40.5-42.5 | cuvette wash |

f) Specific proteins with excess antigen:

| cycle | time (min) | event |
|-------|-----------|-------|
| 1 | 0.5 | sample dispensed |
| 2 | 1.0 | $R_1$ dispensed |
| 3- 5 | 1.5- 2.5 | 3 readings for reagent blank |
| 32 | 16.0 | $R_2$ dispensed |
| 33-35 | 16.5-17.5 | 3 readings for turbidity |
| 81-84 | 40.5-42.5 | cuvette wash |
| 42 | 21.0 | second sample addition for excess antigen determination |
| 43-45 | 21.5-22.5 | 3 readings |
| 81-84 | 40.5-42.5 | cuvette wash |

g) Human antibodies for infectious diseases:

These assays involve a sequential reagent addition protocol with two magnetic particle washings.

| cycle | time (min) | event |
|---|---|---|
| 1 | 0.5 | sample dispensed |
| 1 | 0.5 | particles dispensed |
| 2 | 1.0 | $R_1$ dispensed |
| 29-32 | 14.5-16.0 | first particle wash |
| 32 | 16.0 | $R_2$ dispensed |
| 59-62 | 29.5-31.0 | second particle wash |
| 65 | 32.5 | substrate dispensed |
| 66-76 | 33.0-38.0 | 11 readings |
| 81-84 | 40.5-42.5 | cuvette wash |

h) Longer incubation assays:

There are many possible formats for protocols having more than one tray turn. One such example is set forth below, in which a longer period of readings is provided to increase the sensitivity of the assay:

| cycle | time (min) | event |
|---|---|---|
| 1 | 0.5 | sample dispensed |
| 2 | 1.0 | $R_1$ and $R_2$ dispensed for sequential assays |
| 42 | 21.0 | delayed particle addition |
| 59- 62 | 29.5-31.0 | particle wash |
| 65 | 32.5 | substrate dispensed |
| 66- 76 | 33.0-38.0 | 11 readings |
| 136-146 | 68.0-73.0 | 11 readings |
| 181-184 | 90.5-92.5 | cuvette wash |

Some advantages of the present invention evident from the foregoing description include an automated analytical apparatus and method for performing both heterogeneous and homogeneous assays concurrently on a random access basis through the selective addition of sample, reagents and substrates to a reaction cuvette, with, in the case of heterogeneous assays, addition of magnetic particle suspension and appropriate particle washing, prior to the addition of the substrate.

In view of the above, it will be seen that several objects of the invention are achieved and other advantageous results obtained.

## Claims

A method of effecting analysis of a plurality of liquid samples wherein each sample is analyzed with respect to at least one analyte, said method comprising the steps of:

a) mixing an aliquot of a first sample with one or more liquid reagents at different times in a reaction cuvette to form a first reaction mixture:

b) mixing an aliquot of the same or a different sample with one or more liquid reagents at different times, wherein at least one liquid reagent comprises a suspension of solid phase particles, in a different reaction cuvette to form a second reaction mixture resulting in a bound and an unbound constituent;

c) permitting the reactions of the first and second reaction mixture to proceed concurrently and independently in said reaction cuvettes;

d) selectively separating and removing the unbound constituent from the bound constituent in said different reaction cuvette;

e) adding at least one additional reagent to the solid phase suspension in said different reaction cuvette to generate a detectable signal; and

f) analyzing the reaction in one of said reaction cuvettes independently of the other.

21

2. A method according to claim 1, further including removing the contents of each said reaction cuvette following completion of the analysis sich that said reaction cuvette can be re-used.

3. A method according to claim 1 or 2, therein said analyzing step includes optically monitoring said reaction.

4. A method according to claim 1,2 or 3, wherein said reactions in said reaction cuvettes are monitored by turbidimetric, colorimetric, fluorometric or luminescent methods.

5. A method according according to any of claims 1 to 4, wherein said solid phase suspension includes magnetic particles and said analysis step includes the step of separating said bound constituent from said unbound constituent by means of a magnetic field to facilitate the measurement of components of said unbound constituent.

6. A method according to claim 5, wherein said solid phase suspension includes magnetic particles and said separating and removing step includes the step of separating said bound constituent from said unbound constituent by means of a magnetic field, and removing the unbound constituent by aspiration.

7. A method according to any of claims 1 to 6, wherein said reaction cuvettes are integral with a reaction tray rotatably disposed for bidirectional rotational motion about a vertical axis and said permitting step (c) includes rotating said reaction tray in a stepping manner to bring said reaction cuvettes sequentially to separate predetermined treatment stations disposed about said reaction tray one or more times during an analysis to permit multiple reagent additions, multiple separation, extended incubation times and multiple analysis.

8. A method according to any of claims 1 to 7, wherein said reaction in said reaction cuvette is a homogeneous assay.

9. A method according to any of claims 1 to 8, wherein said reaction in said different reaction cuvette is a heterogeneous assay.

10. A method according to claim 8 or 9, wherein said assay is an immunoassay.

11. An automated analytical apparatus for effecting analysis of a plurality of liquid samples wherein each sample is analyzed with respect to at least one analyte, said apparatus comprising:

a) means for providing an aliquot of a first sample to a reaction cuvette;

b) means for providing one or more liquid reagents to said reaction cuvette to form a first reaction mixture therein;

c) means for providing an aliquot of the same or different sample to a different reaction cuvette;

d) means for providing one or more liquid reagents and at least one liquid reagent comprising a suspension of solid phase particles to said different reaction cuvette to form a second reaction mixture therein, said second reaction mixture resulting in a bound and unbound constituent;

e) means for selectively separating and removing the unbound constituent from the bound constituent in said different reaction cuvette;

f) means for adding at least one additional reagent to the solid phase suspension in said different reaction cuvette to generate a detectable signal; and

g) means for analyzing the reaction in one of said reaction cuvettes independently of the other.

12. Apparatus according to claim 11, further including means for removing the contents of each said reaction cuvette following completion of the analysis, so that said reaction cuvette can be re-used.

13. Apparatus according to claim 11 or 12, wherein said analyzing means includes means for optically monitoring said reaction.

14. Apparatus according to claim 11,12 or 13, wherein said analyzing means includes turbidimetric, colorimetric, fluorometric or luminescent monitoring means.

15. Apparatus according to claim 11,12,13 or 14, wherein said solid phase suspension includes magnetic particles and said analysis means includes means for separating said bound constituent from said unbound constituent by a magnetic field to facilitate the measurement of components of said unbound constituent.

16. Apparatus according to any of claims 11 to 15, wherein said solid phase suspension includes magnetic particles and said separating and removing means includes means for separating said bound constituent from said unbound constituent by a magnetic field, and aspiration means for removing the unbound constituent.

17. Apparatus according to any of claims 11 to 16, wherein said reaction cuvettes are integral with a reaction tray rotatably disposed for bidirectional rotational motion about a vertical axis and further including a drive means operably connected thereto adapted to rotate said reaction tray in a stepping manner to bring said reaction cuvettes sequentially to separate predetermined treatment stations disposed about said reaction tray one or more times during an analysis to permit multiple reagent additions, multiple separation, extended incubation times and multiple analysis.

18. An automated analytical apparatus for effecting analysis of a plurality of liquid samples wherein each sample is analyzed with respect to at least one analyte, said apparatus comprising:

a) a sample handling means including a plurality of sample containers for containing liquid samples and constructed and arranged to position each sample at a sample aspiration station;

b) a magnetic particle suspension storage means for containing a liquid suspension of magnetic particles in an aqueous medium;

c) a reaction tray rotatably disposed for bidirectional rotatable motion about a vertical axis and including a plurality of reaction cuvettes, each reaction cuvette adapted to retain an aliquot of sample and being provided with a pair of opposed transparent walls to define a site passageway for the reading of the aliquot liquid sample contained therein, said reaction tray being operably connected to a drive means which rotates said reaction tray in a stepping manner to bring said reaction cuvettes sequentially to separate predetermined treatment stations disposed at locations about said reaction tray one or more times during an analysis;

d) a sample aspirating-dispensing means constructed and arranged to deliver a precise aliquot of a sample from said sample handling means to a selected reaction cuvette;

e) a particle suspension aspirating-dispensing means constructed and arranged to deliver a precise aliquot of said particle suspension to a selected reaction cuvette;

f) a reagent storage means for containing a plurality of reagents;

g) reagent aspirating-dispensing means constructed and arranged to deliver a precise aliquot of a reagent from said reagent storage means to a selected reaction cuvette;

h) a particle wash station constructed and arranged to selectively wash unbound constituent from a sample- reagent mixture in a selected reaction cuvette;

i) a substrate storage means for containing a plurality of substrates;

j) a substrate aspirating-dispensing means constructed and arranged to deliver a precise aliquot of said substrate to a selected reaction cuvette;

k) an analysis means to analyze the reaction in the reaction cuvette; and

l) control means whereby said sample handling means, sample aspirating-dispensing means, particle suspension aspirating-dispensing means, reagent storage means, reagent aspirating-dispensing means, particle wash means, substrate aspirating-dispensing means, and analysis means are activated selectively at a multiplicity of times for each step of said reaction tray to effect selective homogeneous and heterogeneous analysis of successive samples.

19. Apparatus according to claim 18, further including a cuvette washing means to evacuate the contents of each said reaction cuvette upon completion of the optical measurement.

20. Apparatus according to claim 18 or 19, wherein said sample aspirating-dispensing means is constructed and arranged for vertical reciprocal and bidirectional translational movement so as to be selectively positioned over and immersed into said sample container at said sample aspiration station to aspirate a precise aliquot of sample contained therein, and to dispense the same into a selected reaction cuvette.

21. Apparatus according to claim 18,19 or 20, wherein said sample aspirating-dispensing means is constructed and arranged for vertical reciprocal and bidirectional translational movement so as to be selectively positioned over and immersed into said magnetic particle suspension storage means to aspirate a precise aliquot of suspension contained therein, and to dispense the same into a selected reaction cuvette.

22. Apparatus according to claim 18,19,20 or 21, wherein said reagent storage means includes a reagent tray adapted for bidirectional rotational motion about a vertical axis and reagent-containing dispensers supported thereon, said reagent tray being operably connected to a drive means which rotates said reagent tray to present a desired one of said reagent dispensers to said reagent aspirating-dispensing means.

23. Apparatus according to any of claims 18 to 22, wherein said reagent aspirating-dispensing means is adapted for vertical reciprocal movement and for bidirectional rotational movement so as to be selectively positioned over and immersed into a selective reagent dispenser to aspirate a precise aliquot of said reagent and to dispense the same into a selected reaction cuvette.

24. Apparatus according to any of claims 18 to 23, wherein said substrate aspirating-dispensing means is adapted for vertical reciprocal movement and for bidirectional rotational movement so as to be selectively positioned over and immersed into a selective substrate dispenser to aspirate a precise aliquot of said substrate and to dispense the same into a selective reaction cuvette.

25. Apparatus according to any of claims 18 to 24, wherein said sample handling means includes means for identifying said liquid samples from coded information associated with said sample containers.

26. Apparatus according to any of claims 18 to 25, wherein said analysis station includes an opto-electrical system to measure, for example, the change in light intensity transmitted through the reaction cuvette, or the luminescence of said liquid sample and reagent reaction, or the fluorescence generated by the liquid sample and reagent reaction.

27. Apparatus according to any of claims 18 to 26, further including means to store the output readings of said analysis means.

28. Apparatus according to any of claims 18 to 27, further comprising a means to calculate the concentration of said analyte from the output readings of said analysis means.

29. Apparatus according to any of claims 18 to 28, wherein said analysis means includes a magnetic field generating means to separate said unbound constituent from bound constituent and facilitate the analysis of the reaction in said reaction cuvette.

30. Apparatus according to any of claims 18 to 29, wherein said particle wash station includes a magnetic field generating means to separate said unbound constituent from said bound constituent in said reaction mixture, and an aspiration means for aspirating said unbound constituent.

FIG.1

FIG.2

**FIG.3**

**FIG.8**

FIG.4

FIG.5

EP 0 410 645 A2

**FIG.6**

FIG.7

FIG.7a

EP 0 410 645 A2

FIG.9

FIG.10

FIG.11

FIG.13a

FIG.13

FIG.14

# FIG.15

# FIG.15A

# FIG.15B

**FIG.16**

79    79

78

17

17

# FIG.17

**FIG.17A**

**FIG.17B**

**FIG.12**

12

79d
79c
79d
79a

**FIG.19**

78
79d
79c
79b
79a

9

**FIG.18**

FIG.20

# FIG.21

**FIG.22**

**FIG.23**

**FIG.24**

FIG.25

DIGITAL
SIGNAL
TO
COMPUTER
141

CONTROL SYSTEM OVERVIEW

FIG.26

158

| USER<br>WORK LIST | OUTPUT<br>RPT, ERROR | SYSTEM<br>SET-UP | DATA<br>REDUCTION |
|---|---|---|---|

| SOFTWARE<br>MODULE | CHEMISTRY<br>TABLE | PROTOCOL<br>TABLE | REAGENT<br>POSITION |
|---|---|---|---|

159  160  161

INSTRUMENT
WORK LIST

SOFTWARE
MODULE

CYCLE EVENT CONTROL TABLE

162

SOFTWARE
MODULE

TIMING | SOFTWARE
MODULE | OPTICAL
DATA

163  166

INSTRUMENT
TASK SCHEDULER | ERROR
HANDLING

164  165

FIG.27